# EUROPÄISCHE PATENTSCHRIFT

(11) **EP 3 285 998 B1**
(45) Veröffentlichungstag und Bekanntmachung des Hinweises auf die Patenterteilung: **10.08.2022**
(21) Anmeldenummer: 16720073.2
(22) Anmeldetag: 22.04.2016
(51) Int. Cl.: C08L 33/20

(54) **VERWENDUNG VON FASERVERBUND-WERKSTOFFEN ZUR HERSTELLUNG VON TRANSPARENTEN BZW. TRANSLUZENTEN FORMKÖRPERN**
USE OF FIBER COMPOSITE MATERIALS FOR PRODUCING TRANSPARENT OR TRANSLUCENT MOLDING BODIES
UTILISATION DE MATERIAUX COMPOSITES FIBREUX POUR PRODUIRE DES CORPS MOULÉS TRANSPARENTS OU TRANSLUCIDES

(30) Priorität: 22.04.2015 DE 102015207361
(43) Veröffentlichungstag der Anmeldung: 28.02.2018
(73) Patentinhaber: Ensinger GmbH, 71154 Nufringen (DE)
(72) Erfinder: NIESSNER, Norbert, 67159 Friedelsheim (DE); DEITMERG, Philipp, 57392 Schmallenberg (DE); JAHNKE, Eike, 1180 Aubonne (CH)
(74) Vertreter: Jacobi, Markus Alexander
(86) Internationale Anmeldenummer: PCT/EP2016/058986
(87) Internationale Veröffentlichungsnummer: WO 2016/170098

(56) Entgegenhaltungen:
- EP-A1- 0 523 163
- EP-A1- 2 251 377
- WO-A1-2014/184133
- WO-A1-2015/036526

## Beschreibung

Die vorliegende Erfindung betrifft die Verwendung eines Faserverbund-Werkstoffs (auch Organoblech genannt) zur Herstellung von transparenten bzw. transluzenten Formkörpern, Folien und Beschichtungen. Der Faserverbund-Werkstoff enthält eine thermoplastische Formmasse A als Matrix und mindestens eine Lage aus Verstärkungsfasern B, wobei die mindestens eine Lage der Verstärkungsfasern B in die Matrix mit der thermoplastischen Formmasse A eingebettet wird und wobei die thermoplastische Formmasse A mindestens eine chemisch reaktive Funktionalität aufweist.

Faserverbund-Werkstoffe bzw. Organobleche bestehen meist aus einer Vielzahl von Verstärkungsfasern, die in eine Polymer-Matrix eingebettet sind. Die Einsatzbereiche von Faserverbund-Werkstoffen sind vielfältig. Beispielsweise kommen Faserverbund-Werkstoffe im Fahrzeug- und Luftfahrt-Bereich zum Einsatz. Hierbei sollen Faserverbund-Werkstoffe das Zerreißen oder sonstige Fragmentierungen der Matrix verhindern, um somit die Unfallgefahr durch verteilte Bauteilfetzen zu vermindern. Viele Faserverbund-Werkstoffe sind in der Lage, bei Belastung vergleichsweise hohe Kräfte aufzunehmen, bevor es zum totalen Versagensfall kommt. Gleichzeitig zeichnen sich Faserverbund-Werkstoffe gegenüber herkömmlichen, nicht verstärkten Materialien durch eine hohe Festigkeit und Steifigkeit bei gleichzeitig niedriger Dichte und weiteren vorteilhaften Eigenschaften wie beispielsweise guter Alterungs- und Korrosionsbeständigkeit aus.

Festigkeit und Steifigkeit der Faserverbund-Werkstoffe sind dabei an die Belastungsrichtung und Belastungsart anpassbar. Hierbei sind in erster Linie die Fasern für die Festigkeit und Steifigkeit des Faserverbund-Werkstoffs verantwortlich. Zudem bestimmt auch ihre Anordnung die mechanischen Eigenschaften des jeweiligen Faserverbund-Werkstoffs. Die Matrix dient dagegen meist primär zum Einleiten der aufzunehmenden Kräfte in die einzelnen Fasern und zur Beibehaltung der räumlichen Anordnung der Fasern in der gewünschten Orientierung. Da sowohl die Fasern als auch die Matrix-Materialien variierbar sind, kommen zahlreiche Kombinationsmöglichkeiten von Fasern und Matrix-Materialien in Betracht.

Bei der Herstellung von Faserverbund-Werkstoffen spielt die Verbindung von Fasern und Matrix zueinander eine wesentliche Rolle. Auch die Festigkeit der Einbettung der Fasern in die Polymer-Matrix (Faser-Matrix-Haftung) kann erheblichen Einfluss auf die Eigenschaften des Faserverbund-Werkstoffs haben.

Zur Optimierung der Faser-Matrix-Haftung und um eine "geringe chemische Ähnlichkeit" zwischen den Faseroberflächen und der umgebenen Polymer-Matrix auszugleichen, werden Verstärkungsfasern regelmäßig vorbehandelt. Hierzu werden der sogenannten Schlichte (Schlichtemittel) regelmäßig Haftvermittler zugesetzt. Eine solche Schlichte wird regelmäßig während der Herstellung auf die Faser aufgebracht, um die Weiterverarbeitbarkeit der Fasern (wie Weben, Legen, Nähen) zu verbessern. Wenn die Schlichte für die spätere Weiterverarbeitung unerwünscht ist, muss sie erst in einem zusätzlichen Verfahrensschritt entfernt werden, etwa durch Herunterbrennen. In einigen Fällen werden Glasfasern auch ohne Schlichte verarbeitet.

Dann wird für die Herstellung des Faserverbund-Werkstoffs ein weiterer Haftvermittler in einem zusätzlichen Verfahrensschritt aufgebracht. Schlichte und/oder Haftvermittler bilden auf der Oberfläche der Fasern eine Schicht, welche die Wechselwirkung der Fasern mit der Umgebung wesentlich bestimmen kann. Heute steht eine Vielzahl unterschiedlicher Haftvermittler zur Verfügung. Der Fachmann kann je nach Anwendungsgebiet, zu verwendender Matrix und zu verwendenden Fasern einen geeigneten Haftvermittler auswählen, der mit der Matrix und mit den Fasern kompatibel ist.

Eine technische Herausforderung besteht darin, dass bei Eintritt des totalen Versagensfalls der Faserverbund-Werkstoff einen Sprödbruch erleiden kann. Folglich kann beispielsweise beim Bau von transparenten oder transluzenten Formkörper oder Einsatz von Folien und Beschichtungen, die einer hohen mechanischen Belastung ausgesetzt sind, eine erhebliche Unfallgefahr von zerrissenen Elementen entstehen.

Daher ist es gewünscht, Faserverbund-Werkstoffe mit einem weiten Belastungsbereich bereitzustellen, bei dem der totale Versagensfall unwahrscheinlich ist. Gewünscht sind zudem verbesserte transparente oder transluzente Eigenschaften.

Die erfindungsgemäß eingesetzte Formmasse A ist transparent oder transluzent. Transparente Materialien sind in der Lage, elektromagnetische Wellen, insbesondere Licht, durchzulassen. Im Gegensatz zu transluzenten Materialien besitzen transparente Materialien ebenfalls eine Blick- oder Bilddurchlässigkeit. Transluzente Materialien weisem hingegen eine sogenannte Volumenstreuung auf und sind nur teilweise lichtdurchlässig.

Mit den erfindungsgemäß eingesetzten Faserverbund-Werkstoffen besteht ferner die Möglichkeit, mittels der Werkstoffe verschiedene Elemente bzw. Formteile mit glatten Oberflächen herzustellen.

WO 2014/184133 nennt die Transparenz von Formmassen enthaltend Schlichtebeschichtete, faserförmige und pulverförmige Füllstoffe in thermoplastischen Matrices. Hierein können als Co-Monomere neben Methylacrylat, Ethylacrylat, Propylacrylat, Methylmethacrylat, Ethylmethacrylat, Acrylamid und/oder Vinylmethylether auch funktionelle die Gruppen Phenylmaleinimid, Maleinsäureanhydrid enthalten sein. Derartige thermoplastische Formmassen enthaltend schlagzähmodifizierte Styrol/Nitrilmonomer-Copolymere, daraus hergestellte Formkörper und Folien sowie deren Verwendung werden gelehrt. Die Formmassen aus Styrol-Acrylnitril-Copolymeren (SAN) sind transparent und fest und finden viele Anwendungen im Haushalts- und Sanitärbereich, in der Verpackung kosmetischer Produkte sowie für elektronische und Büroartikel.

In WO 2008/058971 werden Formmassen beschrieben, welche zwei Gruppen von Verstärkungsfasern verwenden. Die Gruppen von Verstärkungsfasern sind jeweils mit verschiedenen Haftvermittler-Komponenten versehen, welche die verschiedenen Faser-Matrix-Haftungen bewirken. Die zweite Faser-Matrix-Haftung ist geringer als die erste Faser-Matrix-Haftung, und die oberflächennahen Lagen von Verstärkungsfasern aus Verstärkungsfasern der ersten Gruppe werden mit größerer Faser-Matrix Haftung gebildet. Als Matrix-Materialien werden Duroplasten wie Polyester und die Thermoplasten Polyamid und Polypropylen vorgeschlagen.

WO 2008/119678 beschreibt ein Glasfaser-verstärktes Styrol-Acrylnitril Copolymer (SAN), welches durch Verwendung von Maleinsäureanhydrid-Gruppen-haltiges Styrol-Copolymer und geschnittenen Glasfasern in seinen mechanischen Eigenschaften verbessert wird. Es wird daher der Einsatz von Kurzfasern gelehrt. Es wird jedoch kein Hinweis auf transparente bzw. transluzente Faserverbund-Werkstoffe gegeben.

CN 102924857 beschreibt Mischungen aus Styrol-Maleinsäureanhydrid-Copolymeren, welche mit Schnittglas versetzt werden und dann relativ hohe Festigkeiten zeigen. Jedoch ist die Spannungsrissbeständigkeit eines solchen Materials gegenüber Lösungsmitteln zu gering. Auch die Festigkeit gegenüber Glasfaserverbund ist deutlich zu niedrig.

CN 101555341 beschreibt Mischungen aus Acrylnitril-Butadien-Styrol (ABS), Glasfasern, Maleinsäureanhydrid-haltigen Polymeren und Epoxidharzen. Bei der Herstellung werden ABS und das Maleinsäureanhydrid-haltige Polymer vorgelegt, um zunächst das Epoxidharz zuzugeben und dann die Glasfasern. Die Fließfähigkeit einer solchen Mischung, enthaltend ein (duromeres) Epoxidharz, ist sehr beschränkt.

KR 100376049 lehrt Mischungen aus SAN, Maleinsäureanhydrid- und N-Phenylmaleinimid-haltigem Copolymer, geschnittenen Glasfasern und einem Aminosilanbasierten Kupplungsagens. Die Verwendung eines solchen Kupplungsagens führt zu zusätzlichen Verarbeitungsschritten und erhöht somit die Produktionskosten.

US 2011/0020572 beschreibt Organoblech-Bauteile mit einem Hybrid-Design aus beispielsweise einer hoch fließfähigen Polycarbonat-Komponente. Dabei wird Polycarbonat (PC) durch geeignete Additive fließfähig gemacht, wie über hyperverzweigte Polyester, Ethylen/(Meth)acrylat Copolymere oder niedermolekulare Polyalkylenglykolester.

EP-A 2 251 377 beschreiben Organobleche, die mit einer Aminosilan-Schlichte behandelt sind. Es wird nicht gelehrt, Organobleche bereitzustellen, die besonders lichtdurchlässig sind.

(Glas-)Fasern werden im Stand der Technik häufig mit einer Schlichte behandelt, welche vor allem die Fasern gegenseitig schützen.

Ein gegenseitiges Beschädigen durch Abrieb soll verhindert werden. Beim gegenseitigen mechanischen Einwirken soll es nicht zur Querfragmentierung (Bruchbildung) kommen.

Ferner kann mittels der Schlichte der Schneidevorgang der Faser erleichtert werden, um vor allem eine gleiche Stapellänge zu erhalten. Daneben kann durch die Schlichte eine Agglomeration der Fasern vermieden werden. Die Dispergierbarkeit von Kurzfasern in Wasser kann verbessert werden. Somit ist es möglich, gleichmäßige Flächengebilde nach dem Naßlegeverfahren zu erhalten.

Eine Schlichte kann dazu beitragen, dass ein verbesserter Zusammenhalt zwischen den Glasfasern und der Polymer-Matrix, in welcher die Glasfasern als Verstärkungsfasern wirken, hergestellt wird. Dieses Prinzip findet vor allem bei den glasfaserverstärken Kunststoffen (GFK) Anwendung.

Bislang enthalten die Glasfaser-Schlichten generell eine große Anzahl an Bestandteilen, wie beispielsweise Filmbildner, Gleitmittel, Netzmittel und Haftvermittler.

Ein Filmbildner schützt die Glasfilamente vor gegenseitiger Reibung und kann zusätzlich eine Affinität zu Kunstharzen verstärken, um somit die Festigkeit und den Zusammenhalt eines Verbundwerkstoffes zu fördern. Stärkederivate, Polymere und Copolymer von Vinylacetat und Acrylestern, Epoxidharz-Emulsionen, Polyurethanharze und Polyamide mit einem Anteil von 0,5 bis 12 Gew.-%, bezogen auf die gesamte Schlichte, sind zu nennen.

Ein Gleitmittel verleiht den Glasfasern und deren Produkten Geschmeidigkeit und vermindert die gegenseitige Reibung der Glasfasern, sowie bei der Herstellung. Oftmals wird jedoch die Haftung zwischen Glas und Kunstharz durch die Verwendung von Gleitmitteln beeinträchtigt. Fette, Öle und Polyalkylenamine in einer Menge von 0,01 bis 1 Gew.-%, bezogen auf die gesamte Schlichte, sind zu nennen.

Ein Netzmittel bewirkt eine Herabsetzung der Oberflächenspannung und eine verbesserte Benetzung der Filamente mit der Schlichte. Für wässrige Schlichten sind beispielsweise Polyfettsäureamide mit einer Menge von 0,1 bis 1,5 Gew.-%, bezogen auf die gesamte Schlichte, zu nennen.

Oftmals existiert keine geeignete Affinität zwischen der Polymer-Matrix und den Glasfasern. Diese Überbrückung können Haftvermittler übernehmen, welche die Adhäsion von Polymeren an der Faseroberfläche erhöhen.

Die meisten organo-funktionellen Silane, wie beispielsweise Aminopropyltriethoxysilan, Methacryloxypropyltrimethoxysilan, Glycidyloxypropyltrimethoxysilan und ähnliche sind zu nennen.

Silane, welche einer wässrigen Schlichte zugesetzt werden, werden meist zu Silanolen hydrolysiert. Diese Silanole können dann mit reaktiven (Glas-)Faseroberflächen reagieren und somit eine Haftmittelschicht (mit einer Dicke von ca. 3 nm) bilden.

Folglich können niedermolekulare, funktionale Agenzien mit Silanolgruppen auf der Glasoberfläche reagieren, wobei diese niedermolekularen Agenzien anschließend weiterreagieren (beispielsweise in Epoxidharzen) und dabei für eine chemische Anbindung der Glasfaser an die Polymer-Matrix sorgen. Eine solche Herstellung ist jedoch zeitaufwändig und dauert bis zur vollständigen Aushärtung der Polymere (beispielsweise der oben genannten Epoxidharze) ungefähr zwischen 30 Minuten bis über eine Stunde.

Es erscheint daher wünschenswert, in einem verbesserten Verfahren bereits polymerisierte Schmelzen in Verbindung mit Glasfasern oder anderen Verstärkungsfasern zu bringen.

Eine Funktionalisierung durch Umsetzung mit Polymeren ist ebenfalls bekannt. So gelingt es, durch Verwendung niedermolekularer Polycarbonat-Typen das Glasfasergewebe bzw. -gelege gut zu tränken und durch Reaktion von funktionellen Gruppen auf der Glasfaseroberfläche mit dem Polycarbonat eine "Pfropfung" durchzuführen, welche die Verträglichkeit zum Polymer erhöht. Diese Verfahrensweise hat jedoch den Nachteil, dass Polycarbonat (PC) eine sehr hohe Viskosität besitzt und für diesen Imprägnierschritt niedermolekulares, d.h. niedrigviskoses PC eingesetzt werden muss, welches eine äußerst schlechte Gebrauchstauglichkeit, wie beispielsweise eine geringe Resistenz gegenüber Spannungsriss auslösenden Agenzien, wie polare Lösungsmittel, aufweist.

Eine technische Aufgabe der Erfindung ist es, einen Faserverbund-Werkstoff (Organoblech) für verschiedene Verwendungen bereitzustellen, der geeignete Eigenschaften für transparente und transluzente Formkörper, Folien und Beschichtungen aufweist. Der Faserverbund-Werkstoff sollte auf einem leicht zu verarbeitenden, gegen herkömmliche Lösemittel weitgehend inerten, gut spannungsrissbeständigen, festen Verbundwerkstoff basieren und zudem eine hohe Transparenz oder Transluzenz sowie eine glatte Oberfläche aufweisen. Idealerweise kommt der Faserverbund-Werkstoff ohne Haftvermittler aus.

Es hat sich überraschend gezeigt, dass die Verwendung eines thermoplastischen Faserverbund-Werkstoffs, enthaltend (bzw. bestehend aus):
a) mindestens eine thermoplastische Formmasse A als Matrix,
b) mindestens eine Lage aus Verstärkungsfasern B, und
c) optional mindestens ein Additiv C,

wobei die mindestens eine Lage aus Verstärkungsfasern B in die thermoplastische Formmasse A eingebettet ist, und
wobei die thermoplastische Formmasse A mindestens eine chemisch reaktive Funktionalität aufweist, welche während des Herstellungsprozesses des Faserverbund-Werkstoffs mit chemischen Gruppen an der Oberfläche der Verstärkungsfaser-Komponente B reagiert, und
wobei die als Matrix fungierende thermoplastische Formmasse A transparent oder transluzent ist und gegenüber Matrices, die keine chemisch reaktive Funktionalität aufweisen, gemessen bei 1 mm Schichtdicke eine um mindestens 20% höhere Transparenz oder Transluzenz für weißes Licht besitzt,
zur Herstellung von transparenten oder transluzenten Formkörpern, Folien und Beschichtungen besonders günstig ist. Der eingesetzte Faserverbund-Werkstoff weist eine gute Festigkeit auf und ist transparent oder transluzent sowie spannungsriss- und lösungsmittelbeständig.

Offenbart ist auch ein (nicht erfindungsgemäßes) Verfahren zur Herstellung transparenten oder transluzenten Formkörpern, Folien und Beschichtungen, umfassend die folgenden Schritte:
(i) Bereitstellen von
   a) mindestens einer thermoplastischen Formmasse A als Matrix,
   b) mindestens einer Lage aus Verstärkungsfasern B, und
   c) optional mindestens eines Additiv C,
      wobei die mindestens eine Lage aus Verstärkungsfasern B in die thermoplastische Formmasse A eingebettet ist, und
      wobei die thermoplastische Formmasse A mindestens eine chemisch reaktive Funktionalität aufweist, welche während des Herstellungsprozesses des Faserverbund-Werkstoffs mit chemischen Gruppen an der Oberfläche der Verstärkungsfaser-Komponente B reagiert, und
      wobei die als Matrix fungierende thermoplastische Formmasse A transparent oder transluzent ist und gegenüber Matrices, die keine chemisch reaktive Funktionalität aufweisen, gemessen bei 1 mm Schichtdicke eine um 10% höhere Transparenz oder Transluzenz für weißes Licht besitzt,
(ii) Inkontaktbringen der Komponenten A und B, und optional C, mit einander, insbesondere durch Einlegen oder Beschichten der Komponente B mit einer (vorzugsweise durch Erwärmen erhaltenen) viskosen oder flüssigen thermoplastischen Formmasse A, optional ferner enthaltend mindestens eines Additiv C; und
(iii) Reagierenlassen der mindestens einen chemisch reaktiven Funktionalität der Komponente A mit chemischen Gruppen der Oberfläche von Komponente B; und optional
(iv) Formgeben des aus den vorhergehenden Schritten erhaltenen Faserverbund-Werkstoffs; und optional
(v) Aushärten lassen des aus den vorhergehenden Schritten erhaltenen Faserverbund-Werkstoffs.

Transparenz bzw. Transluzenz (daher Lichtdurchlässigkeit) ist wie hierin verwendet im weitesten Sinne zu verstehen. Der Fachmann wird erkennen, dass die Lichtdurchlässigkeit, wie experimentell gezeigt, insbesondere die Durchlässigkeit von weißem Tageslicht (oft auch als (tages)lichtweißes oder unbuntes Licht bezeichnet) betrifft. Offenbart ist, dass die Lichtdurchlässigkeit wie hierin verwendet daher die Lichtdurchlässigkeit bei einer Farbtemperatur von 5000 bis 7000 Kelvin (K) (nicht erfindungsgemäß), stärker bevorzugt bei einer Farbtemperatur von 5000 bis 6700 K (nicht erfindungsgemäß) sein kann. Erfindungsgemäß ist die die Lichtdurchlässigkeit wie hierin verwendet die Lichtdurchlässigkeit bei einer Farbtemperatur von 5300 bis 7000 Kelvin, bevorzugt bei einer Farbtemperatur von 5300 bis 6500 K, insbesondere bei einer Farbtemperatur von (etwa) 5500 K.

Das weiße Tageslicht wird gemäß einer besonders bevorzugten Ausführungsform mittels einer Lampe nach DIN EN 12464 (etwa Version DIN EN 12464-1:2011) erzeugt werden. Offenbart ist auch, dass das Tageslicht (nicht erfindungsgemäß) das Sonnenlicht sein kann.

Die Transparenz wird erfindungsgemäß an 1 mm dicken Proben des Faserverbund-Werkstoffs gemäß ASTM D 1003 (etwa ASTM D 1003-13) gemessen (etwa mittels eines Transparenzmessgeräts (etwa Byk Haze gard i (BYK-Gardner, USA)), wie im unten stehenden experimentellen Beispielteil gezeigt wird.

Das Spektrum der Wellenlängen des Lichts, dessen Lichtdurchlässigkeit bestimmt ist, ergibt sich insbesondere bei der Verwendung von Tageslicht bzw. tageslichtartigen Lampen bereits aus der Farbtemperatur. Besonders bevorzugt betrifft die Lichtdurchlässigkeit die Durchlässigkeit von Licht eines Wellenlängenspektrums von (etwa) 280 bis 800 nm, insbesondere 400 nm bis 800 nm (sichtbares Tageslicht), wobei das Licht in seiner Gesamtheit weißes Licht im Sinne von Tageslicht ist. Hierbei stammen bevorzugt mindestens 50%, stärker bevorzugt mindestens 60%, noch stärker bevorzugt mindestens 75%, insbesondere mindestens 90% der Lichtenergie von Photonen des Wellenlängenbereichs zwischen 280 und 800 nm. Zusammenfassend betrifft die Lichtdurchlässigkeit besonders bevorzugt die Durchlässigkeit von Licht einer Farbtemperatur von (etwa) 5500 K wobei mindestens 50%, insbesondere mindestens 90% der Lichtenergie Photonen des Wellenlängenbereichs zwischen 400 und 800 nm zuzuordnen sind.

Beispielhaft kann die Lichtdurchlässigkeit gemessen werden und somit insbesondere verstanden werden als die Durchlässigkeit von Licht der Wellenlänge 400-450 nm, 425-475 nm, 450-500 nm, 475-525 nm, 500-550 nm, 525-575 nm, 550-600 nm, 575-625 nm, 600-650 nm, 625-675 nm, 650-700 nm, 675-725 nm, 700-750 nm, 725-775 nm oder 750-800 nm.

Die Dicke des Faserverbund-Werkstoffs spielt nach dem Lambert-Beerschen Gesetz keine (nennenswerte) Rolle bei der vergleichenden Bestimmung der prozentualen Lichtdurchlässigkeit. Bevorzugt kann die Bestimmung/Messung bei Faserverbund-Werkstoffen ("Organoblechen") mit einer Dicke von 0,1 bis 10 mm, stärker bevorzugt 0,2 bis 5 mm, noch stärker bevorzugt 0,5 bis 2 mm, insbesondere (etwa) 1 mm, erfolgen.

Gemäß einer bevorzugten Ausführungsform ist der Faserverbund-Werkstoff ein (weitgehend) flächiges (planares oder oberflächenstrukturiertes, folienartiges) Organoblech einer Dicke von 0,1 bis 10 mm, stärker bevorzugt 0,2 bis 5 mm, noch stärker bevorzugt 0,5 bis 2 mm, insbesondere (etwa) 1 mm. Alternativ kann der Faserverbund-Werkstoff auch zur Herstellung von dickeren Formteilen verwendet werden.

Bevorzugt enthält der Faserverbund-Werkstoff , insbesondere die Polymerzusammensetzung A, keine Anteile an im Bereich von 400 bis 800 nm absorbierenden Farbstoff(en), die zu einer Absorption von über 10%, über 20%, über 50%, über 75% oder über 90%, von Tageslicht in einem solchen Faserverbund-Werkstoffen mit einer Dicke von 1 mm führen. Es wird verstanden werden, dass der vergleichbare Faserverbund-Werkstoff mit höherer Absorption auch eine vergleichbare, insbesondere gleich, Anteile an Farbstoff(en) enthält wie der erfindungsgemäße Faserverbund-Werkstoff.

Es wird unmittelbar erkannt werden, dass die Begriffe "Verstärkunggfaser B" und "Faser B", wie hierin verwendet, austauschbar zu verstehen sind.

Optional kann zusätzlich zur besseren Transluzenz zudem die Biegefestigkeit des Faserverbund-Werkstoffs (etwa um mehr als 20% oder mehr als 30%) höher sein als bei einem vergleichbaren Faserverbund-Werkstoff, bei dem die Monomere A-I vollständig durch Monomere A-II ersetzt sind. Wie hierin verwendet wird die Biegefestigkeit der Faserverbund-Werkstoffe in der Regel gemäß Standardverfahren ISO 14125 (DIN EN ISO 14125:2011-05) bestimmt, worauf sich auch die aufgeführten Werte beziehen. Alternativ kann die Biegefestigkeit auch gemäß anderer Standardverfahren wie etwa gemäß ASTM D790 Version 15e2 oder ISO 178 (DIN EN ISO 178:2013-09) ermittelt werden.

Optional kann zusätzlich oder alternativ die Oberflächenwelligkeit des Faserverbund-Werkstoffs, die von der thermischen Ausdehnung und Verteilung der Einzelkomponenten abhängt, gering sein. So liegt die thermische Ausdehnung der Faserkomponente B bevorzugt bei 0 bis 5 • 10⁻⁶/K, ist daher bevorzugt geringer als bei der Matrix ohne Faserverstärkung, die beim Abkühlen von Verarbeitungs- auf Gebrauchstemperatur eine signifikante Volumenreduktion (thermische Schwindung plus Phasenumwandlung/Kristallisation) erfährt. Für die Bildung der Oberflächenwelligkeit spielt also nicht die thermische Ausdehnung des Verbundwerkstoffs selbst eine (hauptsächliche) Rolle, sondern alleine der Unterschied der Ausdehnung (bei Abkühlung der Schwindung) der Faser-Komponente B (beispielsweise < 10 • 10⁻⁶/K, bevorzugt 0 bis 5 • 10⁻⁶/K) gegenüber der eine thermoplastische Polymerzusammensetzung A enthaltenen Polymer-matrix-Komponente, auch bei gleichzeitig wechselnder Verteilung von A und B im Querschnitt.

Wie hierin verwendet, wird verstanden werden, dass ein Polymer, sofern nicht anders definiert, auch ein Copolymer (einschließlich einem Terpolymer usw.) sein kann. Dementsprechend kann eine Polymermatrix auch eine Copolymermatrix sein.

Gemäß einer bevorzugten Ausführungsform beträgt die Schmelzflussrate (Melt Volume Rate, MVR) der als Polymermatrix eingesetzten thermoplastische Polymerzusammensetzung A 10 bis 70 cm3/10min, bevorzugt 12 bis 70 cm3/10min, insbesondere 15 bis 55 cm3/10 min bei 220°C/10kg (gemessen nach ISO1133, bevorzugt DIN EN ISO 1133-1:2012-03).

Gemäß einer besonders bevorzugten Ausführungsform beträgt die Schmelzflussrate (Melt Volume Rate, MVR) der als Polymermatrix eingesetzten thermoplastische Polymerzusammensetzung A 10 bis 35 cm3/10min, bevorzugt 12 bis 30 cm3/10min, insbesondere 15 bis 25 cm3/10 min bei 220°C/10kg (gemessen nach ISO1133).

Alternativ kann die Schmelzflussrate (Melt Volume Rate, MVR) der als Polymermatrix eingesetzten thermoplastische Polymerzusammensetzung A 35 bis 70 cm3/10min, bevorzugt 40 bis 60 cm3/10min, insbesondere 45 bis 55 cm3/10 min bei 220°C/10kg (gemessen nach ISO1133), betragen.

Alternativ oder zusätzlich kann die mittels eines Kapillarviskosimeters ermittelte Viskositätszahl (J = (η/η0-1) · 1/c) der als Polymermatrix eingesetzten thermoplastische Polymerzusammensetzung A, gemessen bei Raumtemperatut (20°C) für in Dimethylformamid gelöstes Granulat, 50 bis 100 ml/g betragen, bevorzugt 55 bis 85 ml/g. Gemäß einer bevorzugten Ausführungsform beträgt die Viskositätszahl 55 bis 75 ml/g, bevorzugt 60 bis 70 ml/g, insbesondere 61 bis 67 ml/g. Gemäß einer alternativen bevorzugten Ausführungsform beträgt die Viskositätszahl 60 bis 90 ml/g, bevorzugt 65 bis 85 ml/g, insbesondere 75 bis 85 ml/g.

Bevorzugt weist die Oberfläche eine geringe Oberflächenwelligkeit auf. Dem Fachmann sind zahlreiche Verfahren bekannt, die Oberflächenwelligkeit zu bestimmen. So kann etwa mittels Laser-Abtastung die Oberfläche nachgezeichnet werden und dann ausgemessen werden, welcher Höhenunterschied zwischen Wellenmaxima und - minima auftreten. Unter einer geringen Oberflächenwelligkeit werden im weitesten Sinne mittlere Wellentiefen auf der Oberfläche des Faserverbund-Werkstoffs von unter 30 µm, bevorzugt unter 15 µm, stärker bevorzugt unter 10 µm, stärker bevorzugt unter 8 µm, insbesondere unter 7 µm verstanden.

Gegenstand der Erfindung ist auch die Verwendung eines thermoplastischen Faserverbund-Werkstoffs, enthaltend (oder bestehend aus):
a) 30 bis 95 Gew.-% einer thermoplastischen Formmasse A,
b) 5 bis 70 Gew.-% einer Verstärkungsfaser B, und
c) 0 bis 40 Gew.-% an Additiv C.

Dem Fachmann wird verständlich sein, dass die thermoplastische Formmasse A erfindungsgemäß mindestens ein (Co)polymer umfasst, das mindestens eine chemisch reaktive Funktionalität aufweist, welche während des Herstellungsprozesses des Faserverbund-Werkstoffs mit chemischen Gruppen an der Oberfläche der Verstärkungsfaser-Komponente B reagiert. Ein solches (Co)polymer umfasst mindestens ein funktionelles Monomer A-I, dessen Funktionalität während des Herstellungsprozesses des Faserverbund-Werkstoffs mit chemischen Gruppen an der Oberfläche der Verstärkungsfaser-Komponente B reagiert. Das Monomer A-I umfassende (Co)polymer wird hierin auch als Polymer-Komponente (A-a) bezeichnet.

Optional kann die thermoplastische Formmasse A noch ein oder mehrere (Co)polymere enthalten die wahlweise auch frei von einer solchen chemisch reaktiven Funktionalität sind (daher kein funktionales Monomer A-I enthalten) und somit während des Herstellungsprozesses des Faserverbund-Werkstoffs nicht mit chemischen Gruppen an der Oberfläche der Verstärkungsfaser-Komponente B reagieren. Ein solches (Co)polymer wird hierin auch als Polymer-Komponente (A-b) bezeichnet.

Gegenstand der Erfindung ist auch die Verwendung eines thermoplastischen Faserverbund-Werkstoffs, enthaltend (oder bestehend aus):
a) 38 bis 70 Gew.-% einer thermoplastischen Formmasse A,
b) 29,9 bis 61,9 Gew.-% einer Verstärkungsfaser B, und
c) 0,1 bis 25 Gew.-% an Additiv C.

Gegenstand der Erfindung ist auch die Verwendung eines thermoplastischen Faserverbund-Werkstoffs, wobei die als Matrix M eingesetzte thermoplastische Formmasse A auf (mindestens) einem Styrol-Copolymer basiert und (hauptsächlich, daher weitgehend) amorph ist.

Ein solches Styrol-Copolymer kann, sofern als Polymer-Komponente (A-a) eingesetzt, etwa ein M-I-enthaltenes Styrol-Copolymer (beispielhaft ein Maleinsäureanhydridenthaltendes Styrol-Copolymer) sein.

"Darauf basierend" ist im weitesten Sinne zu verstehen als die genannte(n) Komponente(n) enthaltend, bevorzugt die genannte(n) Komponente(n) zu mehr als 50 Gew.-%, stärker bevorzugt zu mehr als 75 Gew.-%, noch stärker bevorzugt zu mehr als 90 Gew.-%, noch stärker bevorzugt zu mehr als 95 Gew.-% enthaltend oder (weitgehend) aus der/den genannten Komponente(n) bestehend.

Gegenstand der Erfindung ist auch die Verwendung eines thermoplastischen Faserverbund-Werkstoffs, wobei die thermoplastische Formmasse A ausgewählt ist aus der Gruppe bestehend aus: Polystyrol, Styrol-Acrylnitril-Copolymere, α-Methylstyrol-Acrylnitril-Copolymere, schlagzäh modifizierte Acrylnitril-Styrol-Copolymere, insbesondere Acrylnitril-Butadien-Styrol-Copolymere (ABS) und Acrylnitril-Styrol-Acrylester-Copolymere (ASA), sowie Blends der genannten Copolymere mit Polycarbonat oder Polyamid.

Es wird verstanden werden, dass erfindungsgemäß mindestens eine der (Co)polymer-Komponenten der thermoplastischen Formmasse A ein (Co)polymer darstellt, das mindestens eine chemisch reaktive Funktionalität wie hierin beschrieben aufweist (Polymer-Komponente (A-a)). Jede der im vorangehenden Absatz genannten Copolymer-Komponenten kann demnach zusätzlich zu den explizit genannten Monomeren auch eine reaktive Funktionalität aufweisen, die während der Herstellung des Faserverbund-Werkstoffs mit der Oberfläche der Fasern B reagieren kann. Somit kann jeder der vorstehend genannten (Co)polymere auch eine Polymer-Komponente (A-a) darstellen.

Entsprechend werden die vorstehend genannten Polymer-Komponenten in ihrer Verwendung als Polymer-Komponente (A-a) in der Regel auch mindestens ein Monomer A-I, das die chemisch reaktive Funktionalität (daher die Reaktion mit Fasern B) vermittelt, umfassen. Dann können diese auch bezeichnet werden als: Polystyrol-(A-I)-Copolymer, Styrol-Acrylnitril-(A-I)-Copolymer, α-Methylstyrol-Acrylnitril-(A-I)-Copolymer, schlagzäh modifiziertes Acrylnitril-Styrol-(A-I)-Copolymer, insbesondere Acrylnitril-Butadien-Styrol-(A-I)-Copolymer (ABS-(A-I)) und Acrylnitril-Styrol-Acrylester-(A-I)-Copolymer (ASA-(A-I)). Auch Blends der genannten Copolymere mit Polycarbonat oder Polyamid sind möglich.

Optional können die vorstehend genannten Polymer-Komponenten in ihrer Verwendung als Polymer-Komponente (A-a) auch noch zusätzlich ein zweites Monomer (oder sogar noch ein drittes Monomer) umfassen, das die chemisch reaktive Funktionalität vermittelt.

Beispielhaft können daher die vorstehend genannten Polymer-Komponenten (in ihrer Verwendung als Polymer-Komponente (A-a)) im Falle der Verwendung von Maleinsäureanhydrid (MA) als Monomer A-I auch bezeichnet werden als: Polystyrol-Maleinsäureanhydrid-Copolymer, Styrol-Acrylnitril-Maleinsäureanhydrid-Copolymer, α-Methylstyrol-Acrylnitril-Maleinsäureanhydrid-Copolymer, schlagzäh modifiziertes Acrylnitril-Styrol-Maleinsäureanhydrid-Copolymer, insbesondere Acrylnitril-Butadien-Styrol-Maleinsäureanhydrid-Copolymer (ABS-MA) und Acrylnitril-Styrol-Acrylester-Maleinsäureanhydrid-Copolymer (ASA-MA). Auch Blends der genannten Copolymere mit Polycarbonat oder Polyamid sind möglich. Es wird verstanden werden, dass entsprechendes auch für andere Monomere A-I gilt.

Optional können ein oder mehrere beliebige weitere (Co)polymere ohne eine solche Funktionalität (als Polymer-Komponente (A-b)) zusätzlich zu der einen oder den mehreren Polymer-Komponente(n) (A-a) eingesetzt werden. Auch hier können beispielhaft die vorstehend genannten (Co)polymere (daher Polystyrol, Styrol-Acrylnitril-Copolymere, α-Methylstyrol-Acrylnitril-Copolymere, schlagzäh modifizierte Acrylnitril-Styrol-Copolymere, insbesondere Acrylnitril-Butadien-Styrol-Copolymere (ABS) und Acrylnitril-Styrol-Acrylester-Copolymere (ASA), sowie Blends der genannten Copolymere mit Polycarbonat oder Polyamid), dann jedoch ohne die Funktionalität (daher ohne reaktives Monomer A-I), eingesetzt werden.

Besonders bevorzugt basiert die Polymer-Komponente (A-a) der thermoplastischen Formmasse A auf einem SAN-Copolymer.

Der Fachmann wird erkennen, dass das SAN-Copolymer dann zusätzlich ein Monomer A-I umfasst, das während dem Herstellungsprozess mit der Oberfläche der Fasern B reagiert. Entsprechend kann das SAN-Copolymer in seiner Verwendung als Polymer-Komponente (A-a) auch ein SAN-(M-I)-Copolymer (= SAN-(M-I)-Terpolymer) sein, beispielhaft ein SAN-MA-Copolymer (= SAN-MA-Terpolymer).

Gegenstand der Erfindung ist demnach auch die Verwendung eines thermoplastischen Faserverbund-Werkstoffs, wobei die thermoplastische Formmasse A umfasst (oder besteht aus):
mindestens einer Polymer-Komponente (A-a), welche mindestens eine chemisch reaktive Funktionalität aufweist, welche während des Herstellungsprozesses des Faserverbund-Werkstoffs mit chemischen Gruppen an der Oberfläche der Verstärkungsfaser-Komponente B reagiert und ausgewählt ist aus der Gruppe bestehend aus: Styrol-Acrylnitril-Copolymeren, α-Methylstyrol-Acrylnitril-Copolymeren, schlagzäh modifizierten Acrylnitril-Styrol-Copolymeren, insbesondere Acrylnitril-Butadien-Styrol-Copolymeren (ABS) und Acrylnitril-Styrol-Acrylester-Copolymeren (ASA), jeweils enthaltend mindestens eine funktionelle Gruppe, sowie Blends der genannten Copolymere mit Polycarbonat oder Polyamid; und optional
mindestens einer Polymer-Komponente (A-b), keine solche Funktionalität aufweisend, ausgewählt aus der Gruppe bestehend aus: Polystyrol, Styrol-Acrylnitril-Copolymere, α-Methylstyrol-Acrylnitril-Copolymere, schlagzäh modifizierte Acrylnitril-Styrol-Copolymere, insbesondere Acrylnitril-Butadien-Styrol-Copolymere (ABS) und Acrylnitril-Styrol-Acrylester-Copolymere (ASA), sowie Blends der genannten Copolymere mit Polycarbonat oder Polyamid.

Gegenstand der Erfindung ist auch die Verwendung eines thermoplastischen Faserverbund-Werkstoffs, wobei die chemisch reaktive Funktionalität der thermoplastischen Formmasse A basiert auf Komponenten ausgewählt aus der Gruppe bestehend aus: Maleinsäureanhydrid-, N-Phenylmaleinimid-, tert.-Butyl(meth)acrylate- und Glycidyl(meth)acrylat-Funktion, bevorzugt ausgewählt aus der Gruppe bestehend aus: Maleinsäureanhydrid-, N-Phenylmaleinimid- und Glycidyl(meth)acrylat-Funktion.

Die chemisch reaktive Funktionalität der thermoplastischen Formmasse A basiert oftmals auf dem Monomer Maleinsäureanhydrid, welches in kleinen Mengen eingebaut werden kann.

Gegenstand der Erfindung ist auch die Verwendung eines Faserverbund-Werkstoffs, wobei die thermoplastische Formmasse A mindestens 0,1 Gew.-% an Monomeren mit einer chemisch reaktiven Funktionalität, bezogen auf die Menge an Komponente A, enthält. Oftmals werden 0,1 Gew.-% bis 10 Gew.-%, insbesondere 0,1 Gew.-% bis 3 Gew.-% an Monomeren mit einer chemisch reaktiven Funktionalität in Komponente A, oftmals ein SAN-Copolymer, Polystyrol (PS), Polymethylmethacrylat (PMMA) Copolymer oder ein Styrol-Methylmethacrylat (SMMA) Copolymer, eingebaut.

Gegenstand der Erfindung ist auch die Verwendung eines wie oben beschriebenen thermoplastischen Faserverbund-Werkstoffs, wobei die Verstärkungsfasern B aus Glasfasern bestehen, welche bevorzugt als chemisch reaktive Funktionalität Silangruppen an der Oberfläche enthalten.

Gegenstand der Erfindung ist auch die Verwendung eines thermoplastischen Faserverbund-Werkstoffs, wobei die Verstärkungsfasern B an der Oberfläche eine oder mehrere der chemisch reaktiven Funktionalitäten aus der Gruppe bestehend aus: Hydroxy-, Ester- und Amino-Gruppen enthält.

Gegenstand der Erfindung ist auch die Verwendung eines thermoplastischen Faserverbund-Werkstoffs, wobei die Verstärkungsfasern B aus Glasfasern bestehen, welche als chemisch reaktive Funktionalität Silanolgruppen an der Oberfläche enthalten.

Gemäß einer optionalen Ausführungsform wird bei der Herstellung des Faserverbund-Werkstoffs kein Haftvermittler, insbesondere kein Haftvermittler aus der Gruppe bestehend aus Aminosilanen und Epoxy-Verbindungen eingesetzt.

Gegenstand der Erfindung ist auch die Verwendung eines thermoplastischen Faserverbund-Werkstoffs, wobei Komponente A hergestellt wird aus 65 bis 85 Gew.-% Styrol oder (α-Methyl)Styrol, 14,9 bis 32 Gew.-% Acrylnitril und 0,1 bis 3 Gew.-% Maleinsäureanhydrid, bevorzugt aus 65 bis 80 Gew.-% Styrol oder (α-Methyl)Styrol, 19,9 bis 32 Gew.-% Acrylnitril und 0,1 bis 3 Gew.-% Maleinsäureanhydrid, wobei die Verstärkungsfasern B in Form eines Geleges, eines Gewebes, einer Matte, eines Vlieses oder eines Gewirkes eingesetzt werden.

Dem Fachmann ist bekannt, dass sich Flächengebilde F (z.B. Gewebe, Matten, Vliese, Gelege oder Gewirke) von Kurzfasern unterscheiden, da bei ersteren zusammenhängende, größere Flächengebilde F entstehen, die in der Regel länger als 5 mm sein werden. Der Fachmann weiß, dass hierbei die Flächengebilde F bevorzugt so vorliegen, dass sie den Faserverbund-Werkstoff (weitgehend) durchziehen. Daher liegen die Flächengebilde F bevorzugt so vor, dass sie das aus dem Faserverbund-Werkstoff bestehende hergestellte Teil (daher Produkt, etwa Formteil) (weitgehend) durchziehen. Weitgehend durchziehen bedeutet hierbei, dass die Flächengebilde F bzw. Endlosfasern mehr als 50%, bevorzugt mindestens 70%, insbesondere mindestens 90%, der Länge des Faserverbund-Werkstoffs durchziehen. Die Länge des Faserverbund-Werkstoffs ist hierbei die größte Ausdehnung des Teils in einer der drei Raumrichtungen. Stärker bevorzugt durchziehen die Flächengebilde F bzw. Endlosfasern mehr als 50%, bevorzugt mindestens 70%, insbesondere mindestens 90%, der Fläche des hergestellten Faserverbund-Werkstoffs. Die Fläche des Faserverbund-Werkstoffs ist hierbei der Fläche der größten Ausdehnung in zwei der drei Raumrichtungen. Der Faserverbund-Werkstoff ist bevorzugt (weitgehend) flächig.

Gewebe und Gelege sind nach allgemeiner Auffassung im weitesten Sinne zu verstehen als (bevorzugt bidirektionale) Flächengebilde, bei denen die Fasern B in (bevorzugt zwei) unterschiedlichen Raumrichtungen (bevorzugt im 90°-Winkel ± 20% zueinander) angeordnet sind.

Gegenstand der Erfindung ist auch die Verwendung eines thermoplastischen Faserverbund-Werkstoffs, wobei die thermoplastische Formmasse A hergestellt wird aus bis zu 70 Gew.-% (etwa 35 bis 70 Gew,-%) mindestens eines konjugierten Diens, insbesondere Butadien, 20 bis 99,9 Gew.-% (etwa 20 bis 50 Gew.-%) mindestens eines vinylaromatischen Monomers , insbesondere Styrol, und bis 38 Gew.-% (etwa 9,9 bis 38 Gew.-%)Acrylnitril sowie 0,1 bis 5 Gew.-% eines Monomers A-I, welches eine chemisch reaktive Funktionalität aufweist, insbesondere Maleinsäureanhydrid, und wobei der Faserverbund-Werkstoff eine Dicke von < 10 mm, vorzugsweise von < 2 mm, besonders von < 1 mm aufweist.

Gegenstand der Erfindung ist auch die Verwendung eines thermoplastischen Faserverbund-Werkstoffs, wobei der Faserverbund-Werkstoff eine Verrippung oder einen Sandwichaufbau aufweist. Die Verfahrensschritte zur Verrippung sind dem Fachmann bekannt.

Gegenstand der Erfindung ist auch die Verwendung eines thermoplastischen Faserverbund-Werkstoffs, wobei der Faserverbund-Werkstoff schichtartig aufgebaut ist und mehr als zwei Schichten enthält.

Es können daher beispielhaft auch drei, vier, fünf, sechs, sieben, acht, neun, zehn, 10-20, 15-25, 20-50 oder sogar noch mehr Schichten an Fasern B in den Faserverbund-Werkstoff eingebettet sein. Dann weist der Faserverbund-Werkstoff einen Laminatartigen Aufbau auf.

Beispielhaft können die weiteren Schichten gleichartig oder auch andersartig aufgebaut sein als die erfindungsgemäßen, hierin beschriebenen.

Gegenstand der Erfindung ist auch die Verwendung eines thermoplastischen Faserverbund-Werkstoffs zur Herstellung von Fenstern oder von transparenten Gehäusen oder transparenten Einrichtungsgegenständen.

Die Erfindung betrifft auch transparente Formkörpern, Folien oder Beschichtungen, enthaltend einen thermoplastischen Faserverbund-Werkstoff wie oben beschrieben. In einer weiteren Ausführungsform betrifft die Erfindung transparente Formkörper, Folien oder Beschichtungen bestehend aus dem beschriebenen thermoplastischen Faserverbund-Werkstoff aus den Komponenten A bis C.

### Komponente A

Der Faserverbund-Werkstoff enthält mindestens 20 Gew.-%, in der Regel mindestens 30 Gew.-%, bezogen auf das Gesamtgewicht des Faserverbund-Werkstoffs, der thermoplastischen Matrix A bzw. der thermoplastischen Formmasse A.

Die thermoplastische Matrix (M), die die Formmasse A enthält, ist in dem Faserverbund-Werkstoff bevorzugt von 30 bis 95 Gew.-%, besonders bevorzugt von 35 bis 90 Gew.-%, oftmals von 35 bis 75 Gew.-% und insbesondere von 38 bis 70 Gew.-%, bezogen auf den Faserverbund-Werkstoff, vorhanden. Bevorzugt entspricht die thermoplastische Matrix M der thermoplastischen Formmasse A.

Bevorzugt besteht die thermoplastische Formmasse A hauptsächlich (zu mehr als 50%, insbesondere zu mehr als 90%) aus (ggf. modifiziertem) Polystyrol oder einem Copolymer (A-1). Gemäß einer Ausführungsform besteht die thermoplastische Formmasse A zu mindestens 95 Gew.-%, bevorzugt zu mindestens 98 Gew.-% aus dem Copolymer A-1. Die thermoplastische Formmasse A kann auch nur aus Copolymer A-1 bestehen.

Für einen erfindungsgemäßen Faserverbund-Werkstoff kommen als thermoplastische Formmasse A zwar beliebige thermoplastische Kunststoffe in Frage, insbesondere jedoch werden Styrol-Copolymere, insbesondere SAN, SMMA, ABS und ASA, eingesetzt.

Wie oben bereits ausgeführt, stellt erfindungsgemäß mindestens eine der (Co)polymer-Komponenten der thermoplastischen Formmasse A ein (Co)polymer dar, das mindestens eine chemisch reaktive Funktionalität wie hierin beschrieben aufweist (Polymer-Komponente (A-a)). Mindestens eine der vorstehend genannten Polymer-Komponenten (daher mindestens ein (ggf. modifiziertem) Polystyrol und/oder mindestens ein Copolymer A-1 (Styrol-Copolymer, insbesondere SAN, SMMA, ABS und A-SA)) umfasst mindestens ein Monomer A-I.

Beispielhaft, im Falle der Verwendung von Maleinsäureanhydrid (MA) als Monomer A-I, kann das Polystyrol daher ein Polystyrol-Maleinsäureanhydrid-Copolymer (S-MA), das Copolymer A-1 beispielhaft Styrol-Acrylnitril-Maleinsäureanhydrid-Copolymer (SAN-MA), Styrol-Methylmethacrylat-Maleinsäureanhydrid-Copolymer (SMMA-MA), Acrylnitril-Butadien-Styrol-Maleinsäureanhydrid-Copolymer (ABS-MA), Acrylester-Styrol-Acrylnitril-Maleinsäureanhydrid-Copolymer (ASA-MA) sein.

Optional können zusätzlich zu der mindestens einen Polymer-Komponente (A-a) ein oder mehrere beliebige weitere (Co)polymere ohne eine solche Funktionalität (als Polymer-Komponente (A-b)) eingesetzt werden. Es wird verstanden werden, dass dies optional auch Polystyrol, SAN, SMMA, ABS und/oder ASA (jeweils kein Monomer A-I umfassend) sein kann.

Die erfindungsgemäße thermoplastische Formmasse A ist transparent oder transluzent. Transparente Materialien sind in der Lage elektromagnetische Wellen, insbesondere Licht, durchzulassen. Im Gegensatz zu transluzenten Materialien besitzen transparente Materialien ebenfalls eine Blick- oder Bilddurchlässigkeit. Transluzente Materialien weise eine sogenannte Volumenstreuung auf und sind nur teilweise lichtdurchlässig. Die Prüfung optischer Eigenschaften, wie Transparenz, wird beispielsweise im Handbuch der Kunststoffprüfung (Carl Hanser Verlag München Wien, 1992, Kapitel 9, S. 365-389) beschrieben.

Die thermoplastische Formmasse A (Komponente A) ist bevorzugt eine amorphe Formmasse, wobei amorpher Zustand der thermoplastischen Formmasse (Thermoplast) bedeutet, dass die Makromoleküle ohne regelmäßige Anordnung und Orientierung, d.h. ohne gleich bleibenden Abstand, völlig statistisch angeordnet sind.

Bevorzugt weist die gesamte thermoplastische Formmasse A amorphe, thermoplastische Eigenschaften auf, ist daher schmelzbar und (weitgehend) nicht kristallin. Dadurch ist der Schrumpf der thermoplastische Formmasse A, und daher auch des gesamten Faserverbund-Werkstoffs, vergleichsweise gering. Es können besonders glatte Oberflächen bei den Formteilen erhalten werden.

Alternativ enthält die Komponente A einen teil-kristallinen Anteil von kleiner 60 Gew.%, bevorzugt kleiner 50 Gew.-%, besonders bevorzugt kleiner 40 Gew.-%, bezogen auf das Gesamtgewicht von Komponente A.

Teilkristalline Thermoplasten bilden sowohl chemisch regelmäßige, als auch geometrische Bereiche aus, d. h. es gibt Bereiche, in denen sich Kristalliten bilden. Kristalliten sind Parallelbündelungen von Molekülabschnitten oder Faltungen von Molekülketten.

Einzelne Kettenmoleküle können dabei teilweise den kristallinen oder den amorphen Bereich durchlaufen. Sie können manchmal sogar mehreren Kristalliten gleichzeitig angehören.

Die thermoplastische Formmasse A kann ein Blend von amorphen thermoplastischen Polymeren und teilkristallinen Polymeren sein. Die thermoplastische Formmasse A kann z.B. ein Blend eines Styrol-Copolymers mit einem oder mehreren Polycarbonat(en) und/oder einem oder mehreren teilkristallinen Polymeren (wie Polyamid) sein, wobei der Anteil teilkristalliner Mischkomponenten an der gesamten Komponente A kleiner als 50 Gew.-%, bevorzugt kleiner 40 Gew.-% sein sollte.

Erfindungsgemäß enthält die eingesetzte thermoplastische Formmasse A mindestens ein Copolymer A-1, das Monomere A-I umfasst, die mit den funktionellen Gruppen B-I der eingebetteten Verstärkungsfasern B kovalente Bindungen eingehen. Der Anteil an Monomeren A-I in der thermoplastischen Formmasse A kann variabel gewählt sein. Je höher der Anteil an Monomeren A-I und der funktionellen Gruppen (B-I) ist, desto stärker kann auch die Bindung zwischen der thermoplastischen Formmasse A und den Verstärkungsfasern B sein. Monomere A-I können in Copolymer A-1 noch als Monomere vorliegen oder in das Copolymer A-1 integriert sein. Vorzugsweise sind die Monomere A-I in das Copolymer A-1 integriert.

Gemäß einer bevorzugten Ausführungsform ist das Copolymer A-1 aufgebaut mit einem Anteil an Monomeren A-I von mindestens 0,1 Gew.-%, bevorzugt von mindestens 0,5 Gew.-%, insbesondere von mindestens 1 Gew.-%, z. B. 1 bis 3 Gew.-%, bezogen auf A.

Als Monomere A-I, die mit den funktionellen Gruppen B-I der Fasern B kovalente Bindungen eingehen können, kommen alle Monomere in Frage, die derartige Eigenschaften aufweisen. Bevorzugt sind dabei als Monomere A-I solche, die durch Reaktion mit Hydroxy- oder Aminogruppen kovalente Bindungen eingehen können.

Bevorzugt, weisen die Monomere A-I auf:
(a) mindestens eine Funktionalität, die in der Lage ist, mit den funktionellen Gruppen B-I der Oberfläche der Fasern B (etwa durch Reaktion mit Hydroxyl- und/oder Aminogruppen) kovalente Bindungen einzugehen; und
(b) mindestens eine zweite Funktionalität, die in der Lage ist, in das Copolymer A-1 eingebunden zu werden, beispielsweise eine Doppelbindung, bevorzugt eine endständige Doppelbindung, die mittels radikalischer Polymerisation in das Copolymer A-1 eingebunden wird.

Optional kann das Copolymer A-1 oder auch ein anderes in der thermoplastischen Formmasse A enthaltenes (Co)polymer ein oder mehrere weitere Monomere enthalten, die in der Lage sind, mit den Fasern B kovalente oder nicht-kovalente Bindungen einzugehen.

Gemäß einer bevorzugten Ausführungsform sind die Monomere A-I ausgewählt aus der Gruppe bestehend aus:
Maleinsäureanhydrid (MA),
N-Phenylmaleimid (PM),
tert.-Butyl(meth)acrylat und
Glycidyl(meth)acrylat (GM).

Gemäß einer stärker bevorzugten Ausführungsform sind die Monomere A-I ausgewählt aus der Gruppe bestehend aus Maleinsäureanhydrid (MA), N-Phenylmaleimid (PM) und Glycidyl(meth)acrylat (GM).

Es können auch zwei dieser Monomere A-I im Copolymer A-1 enthalten sein. Das Copolymer A-1 der Formmasse A kann optional weitere funktionelle Monomere A-II beinhalten.

Insbesondere weist die erfindungsgemäße thermoplastische Formmasse A gegenüber einer Matrix die keine chemisch reaktive Funktionalität besitzt eine um mindestens (ca.) 10 %, vorzugsweise um mindestens (ca.) 15%, oftmals um mindestens (ca.) 20% höhere Transparenz oder Transluzenz für weißes Licht auf.

Die Matrix-Komponente M enthält mindestens eine thermoplastische Formmasse A, insbesondere eine solche, die für die Herstellung von Faserverbund-Werkstoffen geeignet ist. Bevorzugt werden für die Formmasse A amorphe Thermoplaste eingesetzt. Beispielsweise werden Polystyrol (Standard Polystyrol PS oder schlagfest Polystyrol HIPS) oder Styrol-Copolymere eingesetzt, wie Styrol-Acrylnitril-Copolymere (SAN) oder α-Methylstyrol-Acrylnitril-Copolymere (AMSAN), schlagzäh modifizierte Styrol-Acrylnitril-Copolymere, wie Acrylnitril-Butadien-Styrol-Copolymere (ABS), Styrol-Methylmethacrylat-Copolymere (SMMA), Methacrylat-Acrylnitril-Butadien-Styrol-Copolymere (MABS) oder Acrylester-Styrol-Acrylnitril-Copolymere (ASA).

Es wird verstanden werden, dass hierbei mindestens eine der Polymer-Komponenten in der thermoplastische Formmasse A mit Monomer A-I modifiziert ist (Polymer-Komponente (A-a)), bevorzugt eine oder mehrere der vorstehend genannten Styrol-Copolymere mit Monomer A-I modifiziert ist. Beliebige weitere Polymer-Komponenten (etwa Styrol-Copolymere, bevorzugt solche wie vorstehend genannt) können optional zusätzlich in der thermoplastische Formmasse A enthalten sein, die optional nicht mit Monomer A-I modifiziert sind (Polymer-Komponente (A-b)) sind.

Auch Blends der zuvor genannten Copolymere (ein oder mehreren Polymer-Komponenten (A-a) und optional (A-b)) mit Polycarbonat oder teilkristallinen Polymeren wie Polyamid, sind geeignet, vorausgesetzt, der Anteil teilkristalliner Mischkomponenten an der Komponente A ist kleiner als 50 Gew.%. Ganz besonders bevorzugt werden SAN-(M-I)-Copolymere (mit Modifizierung durch Monomere A-I) als (optional auch als einziger polymerer Bestandteil) Bestandteil der thermoplastischen Formmasse A eingesetzt.

Ein erfindungsgemäß verwendetes, modifiziertes (α-Methyl)Styrol-Acrylnitril-Copolymer als thermoplastische Formmasse A (als Polymer-Komponente (A-a)) wird hergestellt aus, bezogen auf das (a-Methyl)Styrol-Acrylnitril-Copolymer, 58 bis 85 Gew.-%, vorzugsweise 65 bis 80 Gew.-% (a-Methyl)Styrol, 14,9 bis 37 Gew.-%, vorzugsweise 19,9 bis 32 Gew.-% Acrylnitril und 0,1 bis 5 Gew.-%, vorzugsweise 0,1 bis 3 Gew.-% Maleinsäureanhydrid. Auch Mischungen aus Styrol-Acrylnitril-Copolymer mit α-MethylStyrol-Acrylnitril-Copolymer sind zu nennen.

Ein weiteres erfindungsgemäß verwendetes, modifiziertes Copolymer (als Polymer-Komponente (A-a)) der thermoplastischen Formmasse A kann hergestellt werden aus, bezogen auf das Copolymer, 0,1 bis 30 Gew % Maleinsäureanhydrid als Komponente A-I und 70-99.9 % Styrol, bevorzugt 0,2 bis 20 Gew % Maleinsäureanhydrid als Komponente A-I und 80-99.8 % Styrol, stärker bevorzugt 0,3 bis 10 Gew.-% Maleinsäureanhydrid als Komponente A-I und 90-99.7 % Styrol.

Ein erfindungsgemäßes (modifiziertes) (α-Methyl)Styrol-Methylmethacrylat-Copolymer als thermoplastische Formmasse A (oder ein Bestandteil davon) wird hergestellt aus, bezogen auf das (α-Methyl)Styrol-Methylmethacrylat-Copolymer, mindestens 50 Gew.%, vorzugsweise 55 bis 95 Gew.-%, besonders bevorzugt 60 bis 85 Gew.-% (α-Methyl)Styrol, 4,9 bis 45 Gew.-%, vorzugsweise 14,9 bis 40 Gew-% Methylmethacrylat und 0,1 bis 5 Gew.-%, vorzugsweise 0,1 bis 3 Gew.-% eines Monomers A-I, wie Maleinsäureanhydrid. Das (α-Methyl)Styrol-Methylmethacrylat-Copolymer kann zufällig oder als Blockpolymer aufgebaut sein. Komponente A kann auch hergestellt werden aus bezogen auf Komponente A, mindestens 50 Gew.-%, vorzugsweise 55 bis 95 Gew.-%, besonders bevorzugt 60 bis 85 Gew.-% vinylaromatisches Monomer, 4,9 bis 45 Gew.-%, vorzugsweise 14,9 bis 40 Gew-% Methylmethacrylat und 0,1 bis 5 Gew.%, vorzugsweise 0,1 bis 3 Gew.-% eines Monomers A-I, wie Maleinsäureanhydrid.

Ein erfindungsgemäßes Acrylnitril-Butadien-Styrol-Copolymer als thermoplastische Formmasse A (oder ein Bestandteil davon) wird nach bekannten Methoden hergestellt aus Styrol, Acrylnitril, Butadien und einem funktionellen weiteren Monomer A-I, wie z. B. Methylmethacrylat.

Das modifizierte ABS-Copolymer kann z. B. enthalten: bis zu 70 Gew.-% (etwa 35 bis 70 Gew.-%) Butadien, bis zu 90 Gew.-% (etwa 20 bis 50 Gew.-%) Styrol und bis zu 38 Gew.-% (etwa 9,9 bis 38 Gew.-%) Acrylnitril sowie 0,1 bis 5 Gew.-%, vorzugsweise 0,1 bis 3 Gew.-% eines Monomers A-I, wie Maleinsäureanhydrid. Komponente A kann auch hergestellt werden aus 35 bis 70 Gew.-% mindestens eines konjugierten Diens, 20 bis 50 Gew.-% mindestens eines vinylaromatischen Monomers und 9,9 bis 38 Gew.-% Acrylnitril sowie 0,1 bis 5 Gew.-%, vorzugsweise 0,1 bis 3 Gew.-% eines Monomers A-I, wie Maleinsäureanhydrid.

In einer weiteren bevorzugten Ausführungsform, ist die erfindungsgemäße Komponente A ein ABS, ein ASA, ein MABS, ein Styrol/Butadien Copolymer wie z.B. schlagfestes Polystyrol, ein Styrol-butadien-Blockcopolymer wie z.B. Styrolux^{®}, Styroflex^{®}, (beide Styrolution, Frankfurt), K-Resin, Clearen, Asaprene, ein Polycarbonat, ein amorpher Polyester oder ein amorphes Polyamid.

In einer besonders bevorzugten Ausführungsform, ist die erfindungsgemäße Komponente A ein Styrol/Butadien Copolymer wie z.B. schlagfestes Polystyrol, ein Styrol-butadien-Blockcopolymer wie z.B. Styrolux^{®}, Styroflex^{®}, (beide Styrolution, Frankfurt), K-Resin, Clearen, Asaprene, ein Polycarbonat, ein amorpher Polyester oder ein amorphes Polyamid.

Der Fachmann wird verstehen, dass erfindungsgemäß mindestens eine der (Co)polymer-Komponenten der thermoplastischen Formmasse A ein (Co)polymer darstellt, das mindestens eine chemisch reaktive Funktionalität wie hierin beschrieben aufweist (Polymer-Komponente (A-a)). Dies kann auch eine Polymer-Komponente wie vorstehend beschrieben sein, die in der genannten Formmasse mindestens ein funktionales Monomer A-I enthält. Optional können ein oder mehrere beliebige weitere (Co)polymere ohne eine solche Funktionalität (als Polymer-Komponente (A-b)) eingesetzt werden.

In einer weiteren Ausführungsform kann die Matrix M aus mindestens zwei voneinander unterschiedlichen thermoplastischen Formmassen A bestehen. Diese verschiedenen Formmassetypen können beispielsweise einen unterschiedlichen Schmelzflussindex (MFI), und/oder andere Co-Monomere oder Additive aufweisen.

Gemäß der Erfindung kann der Begriff Molekulargewicht (Mw) im weitesten Sinne als die Masse eines Moleküls oder einen Bereich eines Moleküls (z.B. ein Polymerstrang, ein Blockpolymer oder ein kleines Molekül) verstanden werden, welches in g/mol (Da) und kg/mol (kDa) angegeben werden kann. Vorzugsweise ist das Molekulargewicht (Mw) das Gewichtsmittel, welches über die im Stand der Technik bekannten Verfahren bestimmt werden kann.

Bevorzugt weisen die thermoplastischen Formmassen A ein Molekulargewicht Mw von 60.000 bis 400.000 g/mol, besonders bevorzugt von 80.000 bis 350.000 g/mol auf, wobei Mw durch Lichtstreuung in Tetrahydrofuran bestimmt werden kann (GPC mit UV-Detektor). Das Molekulargewicht Mw der thermoplastischen Formmassen A kann in einem Bereich von +/- 20% variieren.

Vorzugsweise enthält die thermoplastische Formmasse A ein, durch eine chemisch reaktive Funktionalität modifiziertes Styrol-Copolymer, welches, bis auf den Zusatz der Monomere A-I, im Wesentlichen aus denselben Monomeren aufgebaut ist wie das "normale Styrol-Copolymer", wobei der Monomergehalt +/- 5%, das Molekulargewicht +/- 20% und der Schmelzflussindex (bestimmt bei einer Temperatur von 220 °C und einer Beladung von 10 kg nach dem ISO Verfahren 1133) +/- 20% abweichen. Unter ISO Verfahren 1133 wird bevorzugt DIN EN ISO 1133-1:2012-03 verstanden werden.

Geeignete Herstellverfahren für Komponente A sind die Emulsions-, Lösungs-, Masse- oder Suspensionspolymerisation, bevorzugt ist die Lösungspolymerisation (siehe GB 1472195). In einer bevorzugten Ausführungsform der Erfindung wird die Komponente A nach der Herstellung nach dem Fachmann bekannten Verfahren isoliert und vorzugsweise zu Granulat verarbeitet. Danach kann die Herstellung der Faserverbund-Werkstoffe erfolgen.

### Komponente B

Der Faserverbund-Werkstoff (Organoblech) enthält mindestens 5 Gew.-%, bezogen auf den Faserverbund-Werkstoff, der Verstärkungsfaser B (Komponente B).

Die Verstärkungsfaser B ist in dem Faserverbund-Werkstoff bevorzugt von 5 bis 70 Gew.-%, besonders bevorzugt von 10 bis 65 Gew.-%, oftmals von 25 bis 65 Gew.-% und insbesondere von 29,9 bis 61,9 Gew.-%, bezogen auf den Faserverbund-Werkstoff, enthalten.

Die Verstärkungsfaser B wird oftmals als Flächengebilde F (Lage aus Verstärkungsfasern) eingesetzt werden. Die Verstärkungsfaser B kann jede Faser sein, deren Oberfläche funktionelle Gruppen B-I aufweist, die mit den Monomeren A-I der Komponente A eine kovalente Bindung eingehen können. In einer bevorzugten Ausführungsform sind die funktionellen Gruppen B-I an der Oberfläche der Verstärkungsfaser B ausgewählt aus Hydroxy-, Ester- und Aminogruppen. Besonders bevorzugt sind HydroxyGruppen.

Gemäß einer stärker bevorzugten Ausführungsform sind die Verstärkungsfasern B Glasfasern, die Hydroxygruppen in Form von Silanolgruppen als chemisch reaktive Funktionalität B-I an der Oberfläche aufweisen.

Die Verstärkungsfasern B können in beliebiger Orientierung und Anordnung in den Faserverbund-Werkstoff eingebettet sein, bevorzugt werden sie als Flächengebilde F (Lage aus Verstärkungsfasern) eingesetzt.

Die Verstärkungsfasern B liegen in der Regel in dem Faserverbund-Werkstoff nicht statistisch gleichverteilt vor, sondern in Ebenen mit höherem und solchen mit niedrigerem Anteil (daher als mehr oder weniger separate Lagen). Vorzugsweise wird von einem laminatartigen oder laminaren Aufbau des Faserverbund-Werkstoffs ausgegangen.

Die Verstärkungsfasern B können etwa als Gewebe, Matten, Vliese, Gelege oder Gewirke vorliegen. Derartig gebildete flächige Laminate enthalten schichtweise aufgebaute Verbunde aus flächigen Verstärkungslagen (aus Verstärkungsfasern B) und Lagen der diese benetzenden und zusammenhaltenden Polymer-Matrix, enthaltend mindestens eine thermoplastischer Formmasse A. Gemäß einer bevorzugten Ausführungsform sind die Verstärkungsfasern B schichtweise in den Faserverbund-Werkstoff eingebettet. Bevorzugt liegen die Verstärkungsfasern B als Flächengebilde F vor.

In einem Gelege liegen die Fasern ideal parallel und gestreckt vor. Es werden zumeist Endlosfasern eingesetzt. Gewebe entstehen durch das Verweben von Endlosfasern, beispielsweise von Rovings. Das Verweben von Fasern geht zwangsläufig mit einer Ondulation der Fasern einher. Die Ondulation bewirkt insbesondere eine Absenkung der faserparallelen Druckfestigkeit.

Matten bestehen meist aus Kurz- und Langfasern, die locker über ein Bindemittel miteinander verbunden werden. Durch den Einsatz von Kurz- und Langfasern sind die mechanischen Eigenschaften von Bauteilen aus Matten denen von Geweben unterlegen. Vliese sind Gebilde aus Fasern begrenzter Länge, Endlosfasern (Filamenten) oder geschnittenen Garnen jeglicher Art und jeglichen Ursprungs, die auf irgendeine Weise zu einem Vlies zusammengefügt und auf irgendeine Weise miteinander verbunden worden sind. Gewirke sind Fadensysteme durch Maschenbildung.

Das Flächengebilde F ist bevorzugt ein Gelege, ein Gewebe, eine Matte, ein Vlies oder ein Gewirke. Besonders bevorzugt ist als Flächengebilde F ein Gelege oder ein Gewebe.

### Komponente C

Als weitere Komponente C enthält der eingesetzte Faserverbund-Werkstoff gegebenenfalls 0 bis 40 Gew.-%, vorzugsweise 0 bis 30 Gew.-%, oftmals 0,1 bis 25 Gew.-%, besonders bevorzugt 1 bis 10 Gew.-%, bezogen auf die Summer der Komponenten A bis C, eines oder mehrerer, zu den Komponenten A und B unterschiedlicher Additive (Hilfs- und Zusatzstoffe). Voraussetzung für die Zugabe der Additive C ist, dass die transparenten oder transluzenten Eigenschaften der Komponente A durch die Zugabe nicht verloren gehen.

Teilchenförmige mineralische Füllstoffe, Verarbeitungshilfsmittel, Stabilisatoren, Oxidations-Verzögerer, Mittel gegen Wärmezersetzung und Zersetzung durch ultraviolettes Licht, Gleit- und Entformungsmittel, Flammschutzmittel, Farbstoffe und Pigmente und Weichmacher sind zu nennen. Auch Ester als niedermolekulare Verbindungen sind zu nennen. Gemäß der vorliegenden Erfindung können auch zwei oder mehr dieser Verbindungen verwendet werden. Im Allgemeinen liegen die Verbindungen mit einem Molgewicht kleiner 3000 g/mol, vorzugsweise kleiner 150 g/mol vor.

Teilchenförmige mineralische Füllstoffe können zum Beispiel durch amorphe Kieselsäure, Carbonate wie Magnesiumcarbonat, Calciumcarbonat (Kreide), gepulverter Quarz, Glimmer, unterschiedlichste Silikate wie Tone, Muskovit, Biotit, Suzoit, Zinnmaletit, Talkum, Chlorit, Phlogopit, Feldspat, Calciumsilikate wie Wollastonit oder Kaolin, besonders kalzinierter Kaolin zur Verfügung gestellt werden.

Unter UV-Stabilisatoren fallen beispielsweise verschiedene substituierte Resorcine, Salicylate, Benzotriazole und Benzophenone, die im Allgemeinen in Mengen bis zu 2 Gew.-% eingesetzt werden können.

Erfindungsgemäß können der thermoplastischen Formmasse Oxidationsverzögerer und Wärmestabilisatoren zugesetzt werden. Sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der Mischung, sind einsetzbar.

Ferner können gemäß der Erfindung Gleit- und Entformungsmittel, die in der Regel in Mengen bis zu 1 Gew.-% der thermoplastischen Masse zugesetzt werden. Zu nennen sind hier Stearinsäure, Stearylalkohol, Stearinsäurealkylester und -amide, vorzugsweise Irganox^{®}, sowie Ester des Pentaerythrits mit langkettigen Fettsäuren. Es können die Calcium-, Zink- oder Aluminiumsalze der Stearinsäure sowie Dialkylketone, zum Beispiel Distearylketon, eingesetzt werden. Weiterhin können auch Ethylenoxid-Propylenoxid-Copolymere als Gleit- und Entformungsmittel verwendet werden. Ferner könne natürliche sowie synthetische Wachse verwendet werden. Zu nennen sind PP-Wachse, PE-Wachse, PA-Wachse, gepfropfte PO-Wachse, HDPE-Wachsen, PTFE-Wachse, EBS-Wachse, Montanwachs, Carnauba- und Bienenwachse.

Flammschutzmittel können sowohl halogenhaltige als auch halogenfreie Verbindungen sein. Geeignete Halogenverbindungen, wobei bromierte Verbindungen den chlorierten vorzuziehen sind, bleiben bei der Herstellung und Verarbeitung der erfindungsgemäßen Formmasse stabil, so dass keine korrosiven Gase freigesetzt werden und die Wirksamkeit dadurch nicht beeinträchtigt wird. Bevorzugt werden halogenfreie Verbindungen, wie zum Beispiel Phosphorverbindungen, insbesondere Phosphinoxide und Derivate von Säuren des Phosphors und Salze von Säuren und Säurederivaten des Phosphors, verwendet. Besonders bevorzugt enthalten Phosphorverbindungen Ester-, Alkyl-, Cycloalkyl- und/oder Aryl-Gruppen. Ebenfalls geeignet sind oligomere Phosphorverbindungen mit einem Molekulargewicht kleiner 2000 g/mol wie zum Beispiel in EP-A 0 363 608 beschrieben.

Ferner können Pigmente und Farbstoffe enthalten sein. Diese sind allgemein in Mengen von 0 bis 15, bevorzugt 0,1 bis 10 und insbesondere 0,5 bis 8 Gew.-%, bezogen auf die Summer der Komponenten A bis C, enthalten. Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO₃·Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumoxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff). Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel erhältlich. Weiterhin kann es von Vorteil sein, die genannten Pigmente bzw. Farbstoffe in Mischung einzusetzen, zum Beispiel Ruß mit Kupferphthalocyaninen, da allgemein die Farbdispergierung in den Thermoplasten erleichtert wird.

Beispielhaft besteht der Faserverbund-Werkstoff aus:
20-99.5 Gew.-% an thermoplastischer Polymerzusammensetzung A;
0,5-80 Gew.-% an Fasern B.

Beispielhaft besteht der Faserverbund-Werkstoff aus:
20-50 Gew.%, 30-60 Gew.-%, 40-60 Gew.-%, 40-50 Gew.-%, 50-60 Gew.-%, 50-99.5 Gew.-%, 75-90 Gew.-% oder 80-95 Gew.-% an thermoplastischer Polymerzusammensetzung A; und dem jeweils auf 100 Gew.-% an Gesamtmasse des Faserverbund-Werkstoffs fehlenden Rest an Fasern B (und ggf. weiteren Komponenten, wie etwa Polymer D).
Gemäß einer bevorzugten Ausführungsform umfasst der Faserverbund-Werkstoff 20-50 Vol.%, 30-60 Vol.-%, 40-60 Vol.-%, 40-50 Vol.-%, 50-60 Vol.-%, 50-99.5 Vol.-%, 75-90 Vol.-% oder 80-95 Vol.-% an thermoplastischer Polymerzusammensetzung A, bezogen auf das Gesamtvolumen an Faserverbund-Werkstoff,
Gemäß einer bevorzugten Ausführungsform umfasst der Faserverbund-Werkstoff 20-50 Vol.%, 30-60 Vol.-%, 40-60 Vol.-%, 40-50 Vol.-%, 50-60 Vol.-%, 50-99.5 Vol.-%, etwa 75-90 Vol.-% bzw. 80-95 Vol.-% an Fasern B, bezogen auf das Gesamtvolumen an Faserverbund-Werkstoff,
Gemäß einer besonders bevorzugten Ausführungsform umfasst der Faserverbund-Werkstoff (oder besteht aus):
   40-70 Vol.-%, bevorzugt 50-60 Vol.-%, insbesondere 55-60 Vol.-%, an thermoplastischer Formmasse A (insbesondere Styrol-Acrylnitril-Maleinsäureanhydrid-Terpolymer, umfassend mindestens 0.1 Gew.-% an Maleinsäureanhydrid) und
   30-60 Vol.-%, bevorzugt 40-50 Vol.-%, insbesondere 40-45 Vol.-% (Faser-VolumenAnteil) an Fasern B (insbesondere Glasfasern, ganz besonders eingebracht als Gewebe bzw. Gelege).
Gemäß einer bevorzugten Ausführungsform weist der Faserverbund-Werkstoff im Querschnitt (daher an der Schnittkante, wenn ein flächiger Faserverbund-Werkstoff (beispielsweise mit der Schere) zugeschnitten wird, im Durchschnitt, gemittelt über den gesamten Faserverbund-Werkstoff) auf:
   40-70 %, bevorzugt 50-60 %, insbesondere 55-60 %, an thermoplastischer Formmasse A (insbesondere Styrol-Acrylnitril-Maleinsäureanhydrid-Terpolymer, umfassend mindestens 0.1 Gew.-% an Maleinsäureanhydrid) und
   30-60 %, bevorzugt 40-50 %, insbesondere 40-45 % (Faser-Dicken-Anteil) an Fasern B (insbesondere Glasfasern, ganz besonders eingebracht als Gewebe bzw. Gelege), wobei die %-Angaben hierbei dem prozentualen Dickenanteil (der Schnittkante) entsprechen.

Beispielhaft kann entlang einer Schnittkante eines 1,12 mm dicken Faserverbund-Werkstoffs, die Dicke der Polymermatrix (daher der an thermoplastischer Formmasse A) 0,65 mm (entspricht 58 %) und der Fasern B 0,47 mm (entspricht 42%) betragen.

Gemäß einer bevorzugten Ausführungsform weist der Faserverbund-Werkstoff eine Gesamtdichte von 0,5 bis 2.5 g/ml, stärker bevorzugt von 1 bis 2 g/ml, insbesondere von 1,5 bis 1,75 g/ml auf, etwa von 1,7 g/ml ± 10%.

### Verfahren zur Herstellung und Verwendung der Faserverbund-Werkstoffe

Vorzugsweise werden Organobleche im Spritzgieß- oder Pressverfahren verarbeitet. Somit kann durch eine Funktionsintegration, z.B. das Anspritzen oder Anpressen von Funktionselementen, ein weiterer Kostenvorteil generiert werden, da auf weitere Montageschritte, z.B. das Anschweißen von Funktionselementen, verzichtet werden kann.

Offenbart ist auch ein (nicht erfindungsgemäßes) Verfahren zur Herstellung eines Faserverbund-Werkstoffs umfasst die Schritte:
(i) Bereitstellen von:
   (A) mindestens einer thermoplastischen Formmasse A als Matrix M, enthaltend (modifiziertes) Polystyrol oder mindestens ein Copolymer A-1, das Monomere A-I enthält (sowie optional ein oder mehrere weitere (Co)polymere (A-a) und/oder (A-b));
   (B) mindestens einer Verstärkungsfaser B, deren Oberfläche funktionelle Gruppen B-I aufweist, die mit den Monomeren A-I, eine kovalente Bindung eingehen können;
   (C) optional mindestens einem Additiv C;
(ii) Schmelzen der thermoplastischen Formmasse A und Inkontakt-Bringen dieser mit mindestens einer Verstärkungsfaser B aus Schritt (i); und
(iii) Reagieren mindestens eines Teils der Monomere A-I des Polystyrols oder des Copolymers A-1 mit mindestens einem Teil der funktionellen Gruppen B-I der mindestens einen Verstärkungsfaser B aus Schritt (ii) unter Ausbildung kovalenter Bindungen.

Das (nicht erfindungsgemäße) Herstellungsverfahren kann die bei der Herstellung von Verbundwerkstoffen üblichen Phasen der Imprägnierung, Konsolidierung und Solidifikation (Verfestigen) umfassen, wobei der Prozess über die Wahl der Temperatur, des Drucks und der angewandten Zeiten beeinflusst werden kann.

Hierbei kann der Faserverbund-Werkstoff enthalten (oder bestehen aus):
a) 30 bis 95 Gew.-% mindestens einer thermoplastischen Formmasse A,
b) 5 bis 70 Gew.-%, oftmals 29,9 bis 61,9 Gew.-%, mindestens einer Verstärkungsfaser B, und
c) 0 bis 40 Gew.-%, oftmals 0,1 bis 25 Gew.-%, mindestens eines Additivs C.

Schritt (ii) des Verfahrens, das Schmelzen der thermoplastischen Formmasse A und das Inkontakt-Bringen dieser Schmelze mit den Verstärkungsfasern B, kann auf jede hierzu geeignete Weise erfolgen. Bei einer solchen Imprägnierung kann die Matrix M, bestehend aus mindestens einer thermoplastischen Formmasse A, in einen fließfähigen Zustand überführt werden und die Verstärkungsfasern B unter Ausbildung einer Grenzschicht benetzt werden.

Schritte (ii) und (iii) können auch gleichzeitig durchgeführt werden. Dann findet unmittelbar beim Inkontakt-Bringen der thermoplastischen Formmasse A mit den Verstärkungsfasern B eine chemische Reaktion statt, bei der die Monomere A-I mit der Oberfläche der Verstärkungsfasern B (in der Regel über eine Bindung an die funktionellen Gruppen B-I) eine kovalente Bindung ausbilden. Dies kann beispielhaft eine Veresterung sein (z.B. die Veresterung von Maleinsäureanhydrid-Monomeren mit Silanolgruppen einer Glasfaser). Alternativ kann die Ausbildung einer kovalenten Bindung auch in einem gesonderten Schritt initiiert werden (z.B. durch Temperaturerhöhung, Radikalstarter und/oder Photo-Initiation). Dies kann bei jeder geeigneten Temperatur durchgeführt werden.

Die Schritte (ii) und/oder (iii) werden bei einer Temperatur von mindestens 200°C, bevorzugt mindestens 250°C, stärker bevorzugt mindestens 300°C, insbesondere bei 300°C-340°C durchgeführt.

Hierbei ist bevorzugt darauf zu achten, dass möglichst keine Pyrolyse auftritt und die verwendeten Komponenten thermisch nicht (oder nur wenig (daher zu <50 %)) zersetzt werden. Eine Ausnahme kann hierbei darstellen: eine Zusammensetzung, die durch thermische Abspaltung reaktive Gruppen freisetzt, wie beispielsweise tert.-Butyl(meth)acrylat, wobei durch thermische Elimination bei Temperaturen von etwa ab 200 °C Isobuten freigesetzt wird und die verbleibende funktionelle Gruppe (im Wesentlichen eine Säurefunktion) dann mit der Faseroberfläche reagieren kann.

Bei der Durchführung der Schritte (ii) und/oder (iii) kann die Verweildauer bei Temperaturen von ≥ 200°C nicht mehr als 10 min betragen, bevorzugt nicht mehr als 5 min, stärker bevorzugt nicht mehr als 2 min, insbesondere nicht mehr als 1 min. Oftmals reichen 10 bis 60 Sekunden für die thermische Behandlung aus.

Das offenbarte (nicht erfindungsgemäße) Verfahren, insbesondere die Schritte (ii) und (iii), können grundsätzlich bei beliebigem Druck durchgeführt werden (bevorzugt atmosphärischer Druck oder Überdruck), mit und ohne Anpressen der Komponenten. Bei einem Anpressen mit Überdruck können die Eigenschaften des Faserverbund-Werkstoffs verbessert werden.

Es können daher die Schritte (ii) und/oder (iii) bei einem Pressdruck von 5-100 bar und einer Presszeit von 10-60 s, bevorzugt bei einem Pressdruck von 10-30 bar und einer Presszeit von 15-40 s, durchgeführt werden.

Vorzugsweise werden mit mindestens einer chemisch reaktiven Funktionalität (A-I) versehene Styrol-Copolymere, also amorphe thermoplastische Matrices, als thermoplastische Formmasse A verwendet. Somit kann die Oberflächenqualität, für die nachfolgend beschriebenen Anwendungen, im Vergleich zu den teilkristallinen Thermoplasten für derartige Verkleidungsteile wesentlich gesteigert werden, da durch die geringere Schwindung der amorphen Thermoplaste die Oberflächentopologie, aufgrund der faserreichen (Kreuzungspunkt bei Geweben) und faserarmen Regionen, wesentlich verbessert wird.

Bei der Konsolidierung werden Lufteinschlüsse in dem Faserverbund-Werkstoff vermindert und eine gute Verbindung zwischen thermoplastischen Formmasse A und Verstärkungsfasern B (insbesondere, wenn es sich um schichtenweise Verstärkungsfasern Fasern B handelt) hergestellt. Bevorzugt ist es, nach Imprägnierung und Konsolidierung einen (möglichst weitgehend) porenfreien Materialverbund zu erhalten.

Alternativ können die genannten Schritte in getrennter Abfolge ausgeführt werden. Beispielsweise können zunächst Lagen aus Verstärkungsfasern B mit unterschiedlich vorbereiteten Verstärkungsfasern B vorbereitet werden, wobei eine Imprägnierung der Verstärkungsfasern B mit der Matrix aus thermoplastischer Formmasse A stattfindet. Danach können imprägnierte Lagen mit Verstärkungsfasern B mit unterschiedlicher Faser-Matrix-Haftung vorliegen, die in einem weiteren Arbeitsschritt zu einem Materialverbund als Faserverbund-Werkstoff konsolidiert werden können. Bevor die Lagen aus Verstärkungsfasern B mit der Matrix aus thermoplastischer Formmasse A laminiert werden, kann wenigstens ein Teil der Verstärkungsfasern B einer Vorbehandlung unterzogen werden, in deren Verlauf die spätere Faser-Matrix-Haftung beeinflusst wird. Die Vorbehandlung kann beispielsweise einen Beschichtungsschritt, einen Ätzschritt, einen Wärmebehandlungsschritt oder einen mechanischen Oberflächenbehandlungsschritt enthalten. Insbesondere kann beispielsweise durch Erhitzen eines Teils der Verstärkungsfasern B ein bereits aufgebrachter Haftvermittler teilweise entfernt werden.

Gemäß einer besonders bevorzugten Ausführungsform betrifft die vorliegende Erfindung die Verwendung eines thermoplastischen Faserverbund-Werkstoffs, wobei Komponente A hergestellt wird aus
65 bis 80 Gew.-% (α-Methyl)Styrol,
19,9 bis 32 Gew.-% Acrylnitril und
0,1 bis 3 Gew.-% Maleinsäureanhydrid,
wobei die Verstärkungsfasern B in Form eines Geleges, eines Gewebes, einer Matte, eines Vlieses oder eines Gewirkes eingesetzt werden,
wobei der Faserverbund-Werkstoff schichtartig aufgebaut ist und mehr als zwei Schichten enthält und eine Verrippung oder einen Sandwichaufbau aufweist.

Gemäß einer ganz besonders bevorzugten Ausführungsform betrifft die vorliegende Erfindung die Verwendung eines thermoplastischen Faserverbund-Werkstoffs einer Dicke von < 10 mm, enthaltend:
a) 30 bis 95 Gew.-%, , insbesondere 38 bis 70 Gew.-%, einer als Matrix M eingesetzten thermoplastischen, amorphen Formmasse A basierend auf einem Styrol-Copolymer,
   wobei Komponente A hergestellt wird aus 65 bis 80 Gew.-% (α-Methyl)Styrol, 19,9 bis 32 Gew.-% Acrylnitril und 0,1 bis 3 Gew.-% Maleinsäureanhydrid,
b) 5 bis 70 Gew.-%, insbesondere 29,9 bis 61,9 Gew.-% einer Verstärkungsfaser B, wobei die Verstärkungsfasern B in Form eines Geleges, eines Gewebes, einer Matte, eines Vlieses oder eines Gewirkes eingesetzt werden, und
c) 0 bis 40 Gew.-%, insbesondere 0,1 bis 25 Gew.-%, des Additivs C.
   wobei die mindestens eine Lage aus Verstärkungsfasern B in die thermoplastische Formmasse A eingebettet ist, und
   wobei die thermoplastische Formmasse A mindestens eine chemisch reaktive Funktionalität aufweist, welche während des Herstellungsprozesses des Faserverbund-Werkstoffs mit chemischen Gruppen an der Oberfläche der Verstärkungsfaser-Komponente B reagiert, und
   wobei die als Matrix fungierende thermoplastische Formmasse A transparent oder transluzent ist und gegenüber Matrices, die keine chemisch reaktive Funktionalität aufweisen, gemessen bei 1 mm Schichtdicke eine um 10% höhere Transparenz oder Transluzenz für weißes Licht besitzt,
   zur Herstellung von transparenten oder transluzenten Formkörpern, Folien und Beschichtungen,
   wobei der Faserverbund-Werkstoff eine Verrippung oder einen Sandwichaufbau aufweist und/oder schichtartig aufgebaut ist und mehr als zwei Schichten enthält.

Noch stärker bevorzugt weist das Verfahren und/oder der Faserverbund-Werkstoff zusätzlich ein oder mehrere weitere Merkmale wie hierin beschrieben auf.

Die Verstärkungslagen können beim Herstellungsprozess (Laminieren) vollständig miteinander verbunden werden. Derartige Faserverbund-Werkstoff-Matten bieten optimierte Festigkeit und Steifigkeit in der Faser-Richtung und können besonders vorteilhaft weiterverarbeitet werden.

Das Verfahren kann auch die Herstellung eines Formteils T umfassen.

Gemäß einer bevorzugten Ausführungsform umfasst das Verfahren als weiteren Schritt (iv) eine dreidimensionale Formgebung zu einem Formteil T.

Dies kann auf beliebige Art erfolgen, etwa durch mechanische Formgebung durch einen Formgebungskörper, der auch eine Walze mit Prägung sein kann. Bevorzugt wird der noch formbare Faserverbund-Werkstoff, bei dem die thermoplastische Formmasse A noch (teilweise) geschmolzen vorliegt geformt. Alternativ oder zusätzlich kann auch ein ausgehärteter Faserverbund-Werkstoff kaltgeformt werden.

Bevorzugt wird am Ende des Verfahrens ein (weitgehend) festes Formteil T erhalten.

Bevorzugt umfasst daher das Verfahren als weiteren Schritt (v) das Aushärten des aus einem der Schritte (iii) oder (iv) erhaltenen Produkts.

Dieser Schritt kann auch als Solidifikation bezeichnet werden. Die in der Regel unter Wärmeentzug stattfindende Solidifikation kann anschließend zu einem gebrauchsfertigen Formteil T führen. Optional kann das Formteil T noch nachbearbeitet werden (z.B. entgratet, poliert, gefärbt usw.).

Das Verfahren kann kontinuierlich, semikontinuierlich oder diskontinuierlich erfolgen.

Gemäß einer bevorzugten Ausführungsform wird das Verfahren als kontinuierliches Verfahren durchgeführt, insbesondere als kontinuierliches Verfahren zu Herstellung von glatten oder dreidimensional geprägten Folien.

Alternativ können auch Formteile T semi- oder diskontinuierlich hergestellt werden.

Die Organobleche besitzen eine amorphe, thermoplastische Matrix M. Diese können im Spritzgießverfahren mit einer Verrippung angebracht werden, auf einen geschäumten, thermoplastischen Kern oder auf einen Wabenkern als Deckschichten aufkaschiert (verschweißt) werden.

Die Verbesserung der Bauteilsteifigkeit durch eine Verrippung (Bildung einer gerippten Struktur) wird durch die Vergrößerung des Flächenträgheitsmomentes begründet. Generell beinhaltet die optimale Rippendimensionierung produktionstechnische, ästhetische und konstruktive Gesichtspunkte.

Die Verstärkungsfasern B können schichtweise als Lagen von Verstärkungsfasern B in einem einzigen Verarbeitungsschritt mit der Matrix M, enthaltend eine thermoplastische Formmasse A, imprägniert und konsolidiert werden. Die Herstellung des Faserverbund-Werkstoffs kann auf diese Weise in besonders effizienter Art erfolgen.

Ein weiterer Vorteil der Styrol-Copolymere als amorphe Thermoplaste (z.B. SAN) ist die teilweise hohe Kratzfestigkeit dieser Werkstoffe. Dies hat in den nachfolgend beschriebenen Anwendungsbeispielen den Vorteil, dass die Verkleidungsteile bei der Montage und im späteren Gebrauch nicht verkratzen.

Ein weiterer Vorteil der erfindungsgemäßen Anwendung der Oranobleche zur Herstellung von transparenten und transluzenten Formkörper, Folien und Beschichtungen ist die hohe Steifigkeit und Festigkeit. Fenster müssen beispielsweise hohe Lasten aushalten (beispielsweise in Druckkammern). Als Glasersatz können hierfür die erfindungsgemäßen Organobleche eingesetzt werden. Diese bieten eine hohe Festigkeit und Steifigkeit um bruchsichere Fensterscheiben herzustellen. Die benötigte Steifigkeit und Festigkeit kann beispielsweise durch ein Organoblech in einem Sandwichverbund oder z.B. durch eine Verrippung erreicht werden.

Als Kernmaterial im Sandwichverbund kann sowohl ein Schaumkern (z.B. Rohacell von Evonik), als auch ein Wabenkern (z.B. Honeycomps von EconCore) eingesetzt werden. Um hierbei einen stoffschlüssigen Verbund zwischen Organoblech und Kern zu erreichen, besteht der Kern aus einem chemisch verträglichen Thermoplasten, um so mittels Wärme ein Verschweißen zu erzielen und ein Kaschieren im Produktionsprozess zu ermöglichen.

Eine bevorzugte Möglichkeit eine ausreichende Steifigkeit für beispielsweise Verscheibungen zu erreichen, ist das Hinterspritzen bzw. Hinterpressen einer Verrippung im Spritzgießprozess bzw. im Pressverfahren.

Um auch hier eine stoffschlüssige Anbindung zwischen den Rippen und dem Organoblech zu erreichen sollte eine geeignete thermoplastische Formmasse, insbesondere eines der o.g. Styrol-Copolymere genutzt werden. Vorzugsweise wird eine SAN, ABS oder ASA- basierte thermoplastische Formmasse verwendet.

Durch eine Funktionsintegration kann im Spritzgießprozess ein Kostenvorteil entstehen. So können beispielsweise Montageschritte eingespart werden, in dem Halter, Führungen, Arretierungen, Schnapphaken usw. direkt mit angespritzt werden können.

Der sogenannte "fiber-look" kann zur Herstellung ästhetisch hochwertiger Möbel genutzt werden. Selbst bei dem Einsatz von Glasfaser, welche von Natur aus transparent ist, kann durch eine Lackierung der Fasern diese sichtbar gemacht werden.

Der Einsatz von Organoblechen für transparente oder transluzente Gehäuse, kann beispielsweise für Computer, Mobile Telefone, Notebooks, Monitore, Drucker, Kopierer, TVs, Computer-Monitore, Computermäuse, Touchpads, Telefone, DVD Player, CD Player, MP3- Player, MP4-Player, akustische Boxen, Stereoanlagen genutzt werden.

Bei den Gehäusen ist die Wanddicke, oftmals aufgrund von nicht ausreichender Fließfähigkeit der Spritzgießmasse bzw. einem zu geringen Fließweg-/Wand-Dickenverhältnis, überdimensioniert. Durch den Einsatz von Organoblechen kann daher die Wanddicke wesentlich verringert werden, da das Organoblech nur umgeformt werden muss und somit auch bei sehr großen Bauteilen mit einer sehr geringen Dicke auskommen kann.

Die erfindungsgemäßen Organobleche können beispielsweise mit einer Dicke von < 2mm, vorzugsweise < 1mm, besonders bevorzug <0,7mm produziert werden. Wenn diese dünnen Organobleche mit einer Verrippung und Umsäumung versehen werden, entstehen sehr steife Bauteile, da das Organoblech in der Randfaser des Schalenbauteils liegt, was eine Erhöhung des Widerstandmomentes zur Folge hat. Aufgrund der amorphen Matrix M und dadurch geringen Schwindung, besitzen die Formteile eine sehr glatte Oberfläche, die je nach Bedarf noch lackiert oder kaschiert werden kann.

Bei strukturellen Teilen, wie beispielsweise einem Tragrahmen, können die Organobleche ebenfalls einen großen Gewichtsvorteil erreichen. Auch hier kann mit Hilfe einer Verrippung die Aussteifung der Bauteile unterstützt werden. Zusätzlich kann eine Funktionsintegration nachfolgende Montageschritte und weitere Bauteile einsparen und somit stellt sich neben dem Gewichts- auch ein Kostenvorteil ein.

Besonders eignen sich die Organobleche erfindungsgemäß zur Herstellung von Glasersatz, Fenster, Verscheibungen oder Waschmaschinenfenster. Vor allem im Bereich der Lichttechnik bieten Organobleche ausgezeichnete Voraussetzungen. Opake Lichtschächte, Linsenabdeckungen, Lichtverteilerplatten, Gehäuse für Leuchtkörper, Lichtleiter sind zu nennen.

Ein weiterer Aspekt der gegenwärtigen Erfindung stellen transparente Teile für Möbel, Lampen, Projektionswände, Sportgeräte, Spielsachen, Bausteine, medizintechnische Anwendungen wie Pumpengehäuse, Teile von Werkzeugen, hergestellt aus Organoblechen dar.

Die Erfindung wird in den nachfolgenden Beispielen, Figuren und Ansprüchen näher beschrieben.

Figuren zur beispielhaften Illustration der Erfindung

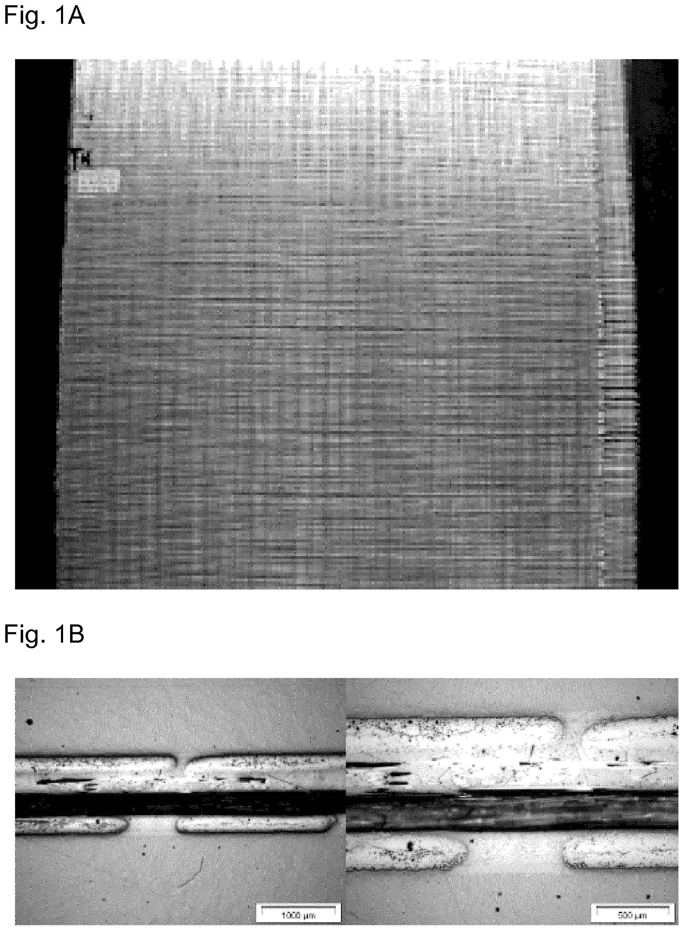

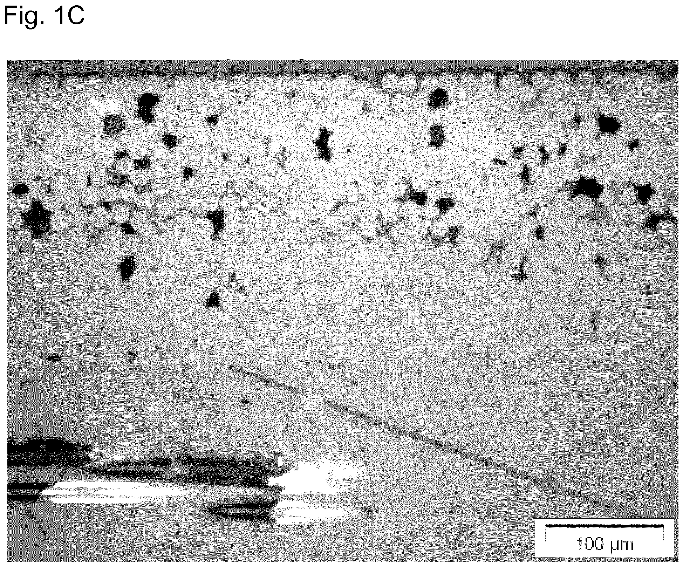

Figur 1 zeigt die Faserverbund-Werkstoffe W, die nach Versuchs-Nr. 1 erhalten wurden. Figur 1A stellt die visuelle Dokumentation dar. Figur 1B zeigt die mikroskopische Ansicht eines Schnitts durch den in horizontaler Orientierung angeordneten laminaren Faserverbund-Werkstoff W (links: 25-fache Vergrößerung, rechts: 50-fache Vergrößerung), wobei die Fasern deutlich als horizontal verlaufende dunkle Schicht zwischen den hellen Schichten aus thermoplastischer Formmasse erkennbar sind. Figur 1C zeigt die 200-fache Vergrößerung, wobei erkennbar wird, dass die Imprägnierung an einigen Stellen nicht abgeschlossen ist.

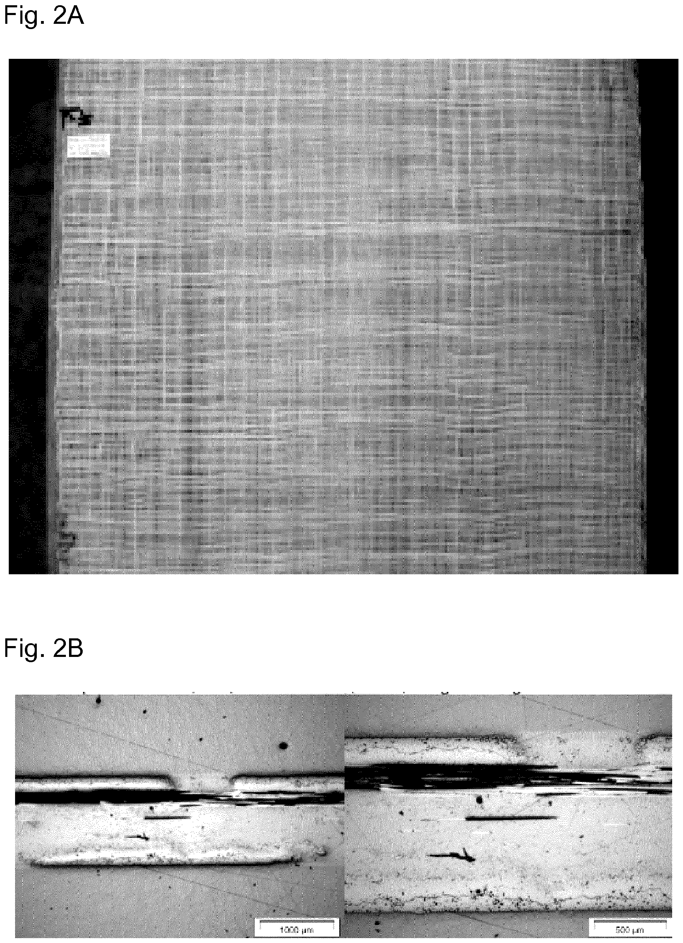

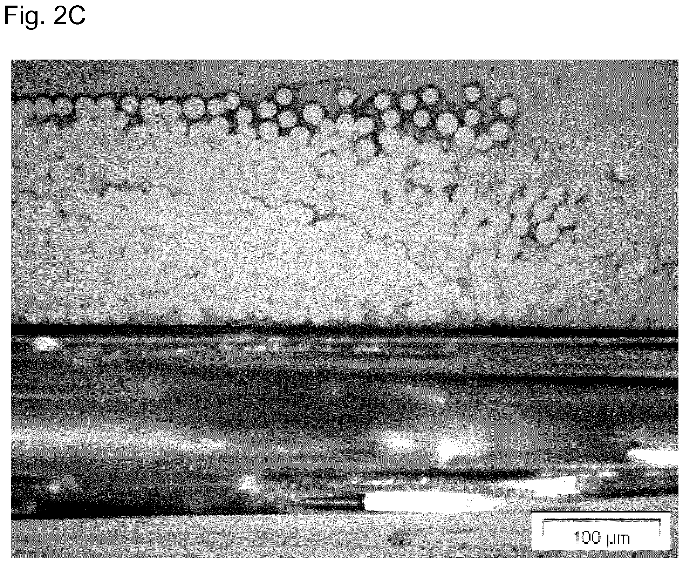

Figur 2 zeigt die Faserverbund-Werkstoffe W, die nach Versuchs-Nr. 2 erhalten wurden. Figur 2A stellt die visuelle Dokumentation dar. Figur 2B zeigt die mikroskopische Ansicht eines Schnitts durch den in horizontaler Orientierung angeordneten laminaren Faserverbund-Werkstoff W (links: 25-fache Vergrößerung, rechts: 50-fache Vergrößerung), wobei die Fasern deutlich als verlaufende dunkle Schicht zwischen den hellen Schichten aus thermoplastischer Formmasse erkennbar sind. Figur 2C zeigt die 200-fache Vergrößerung, wobei erkennbar wird, dass die Imprägnierung teilweise nicht abgeschlossen ist.

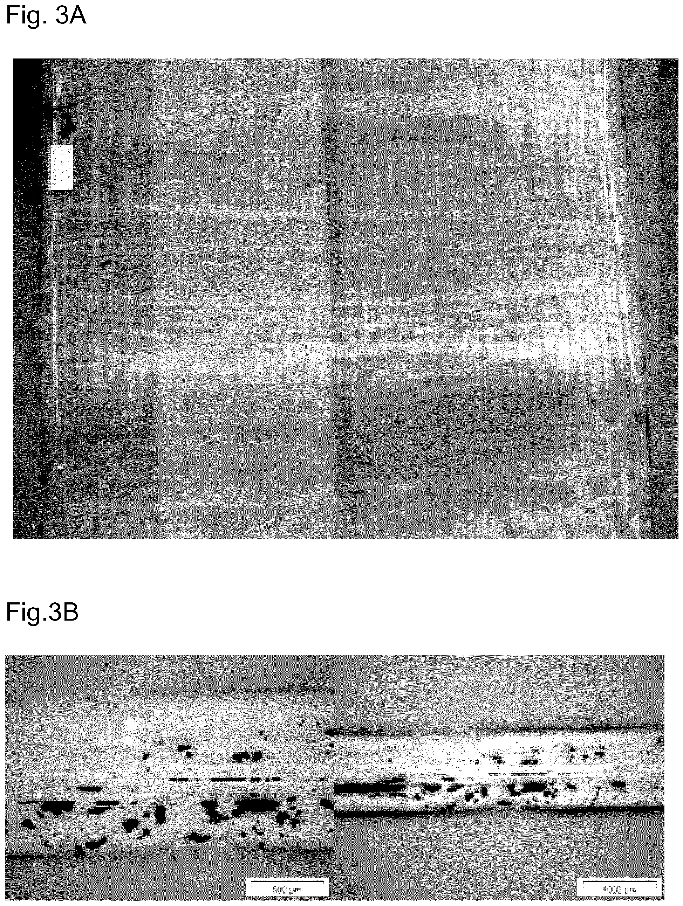

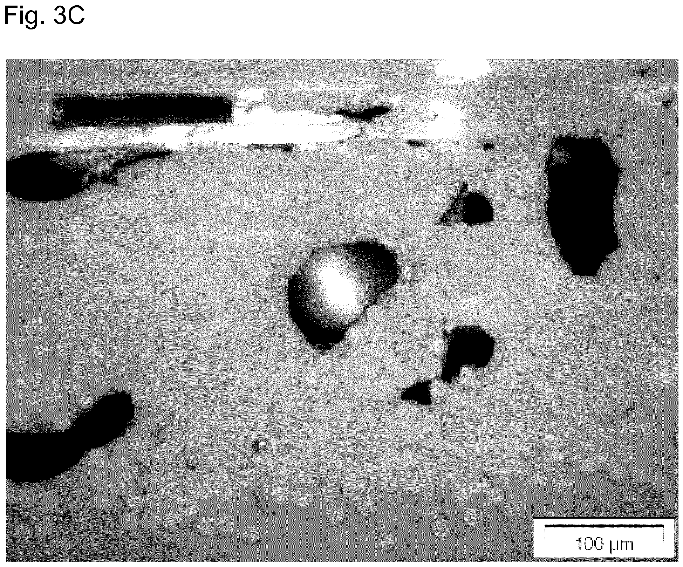

Figur 3 zeigt die Faserverbund-Werkstoffe W, die nach Versuchs-Nr. 3 erhalten wurden. Figur 3A stellt die visuelle Dokumentation dar. Figur 3B zeigt die mikroskopische Ansicht eines Schnitts durch den in horizontaler Orientierung angeordneten laminaren Faserverbund-Werkstoff W (links: 25-fache Vergrößerung, rechts: 50-fache Vergrößerung), wobei keine Schicht aus Fasern erkennbar ist. Figur 3C zeigt die 200-fache Vergrößerung, wobei erkennbar wird, dass die Imprägnierung weitgehend abgeschlossen ist.

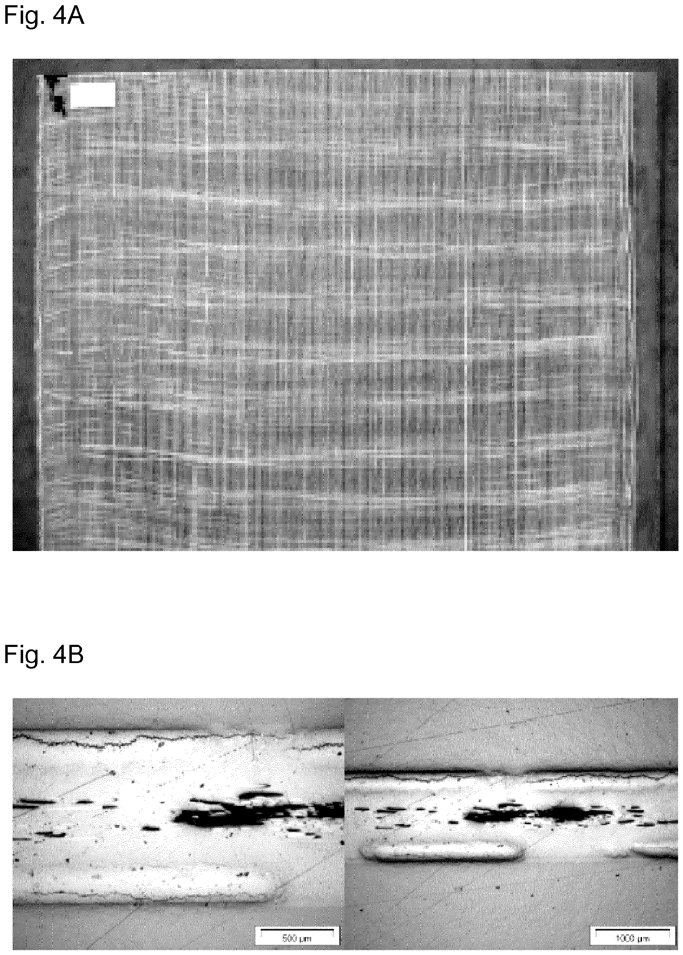

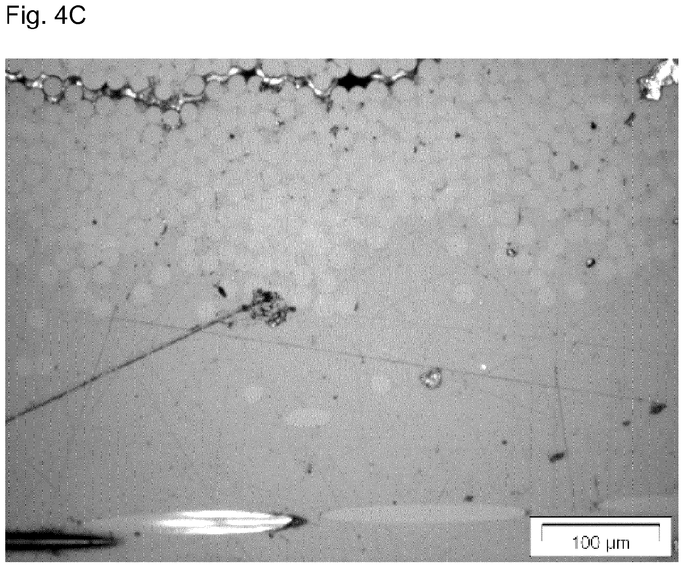

Figur 4 zeigt die Faserverbund-Werkstoffe W, die nach Versuchs-Nr. 4 erhalten wurden. Figur 4A stellt die visuelle Dokumentation dar. Figur 4B zeigt die mikroskopische Ansicht eines Schnitts durch den in horizontaler Orientierung angeordneten laminaren Faserverbund-Werkstoff W (links: 25-fache Vergrößerung, rechts: 50-fache Vergrößerung), wobei keine Schicht aus Fasern erkennbar ist. Figur 4C zeigt die 200-fache Vergrößerung, wobei erkennbar wird, dass die Imprägnierung an einzelnen Stellen nicht vollständig abgeschlossen ist.

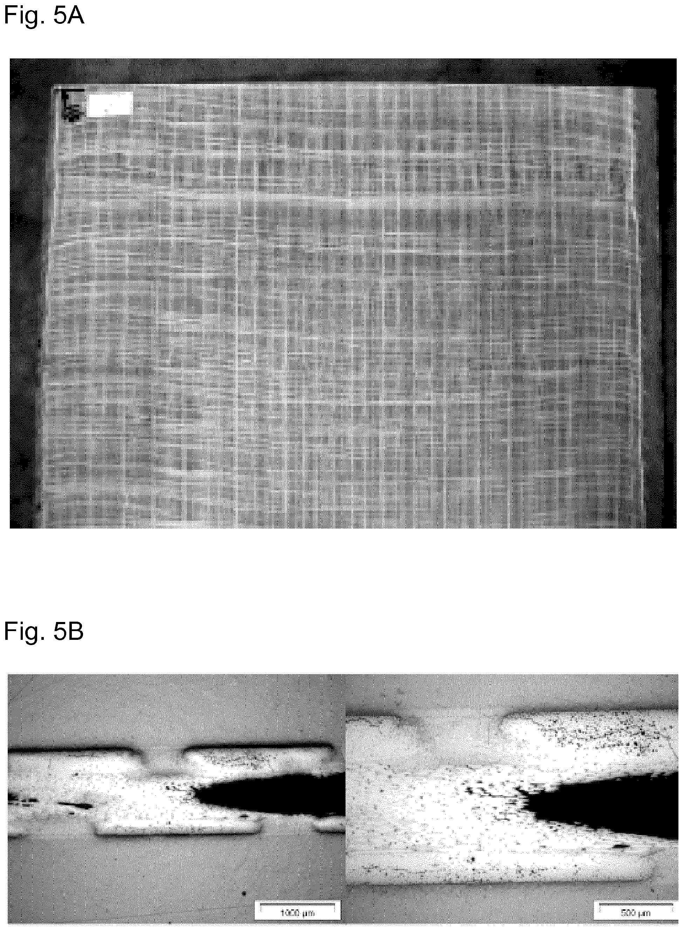

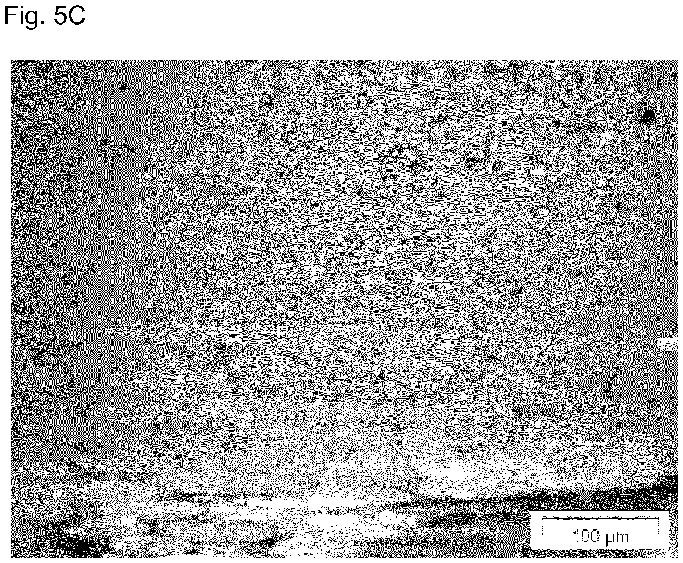

Figur 5 zeigt die Faserverbund-Werkstoffe W, die nach Versuchs-Nr. 5 erhalten wurden. Figur 5A stellt die visuelle Dokumentation dar. Figur 5B zeigt die mikroskopische Ansicht eines Schnitts durch den in horizontaler Orientierung angeordneten laminaren Faserverbund-Werkstoff W (links: 25-fache Vergrößerung, rechts: 50-fache Vergrößerung), wobei keine Schicht aus Fasern erkennbar ist. Figur 4C zeigt die 200-fache Vergrößerung, wobei erkennbar wird, dass die Imprägnierung an wenigen Stellen nicht vollständig abgeschlossen ist.

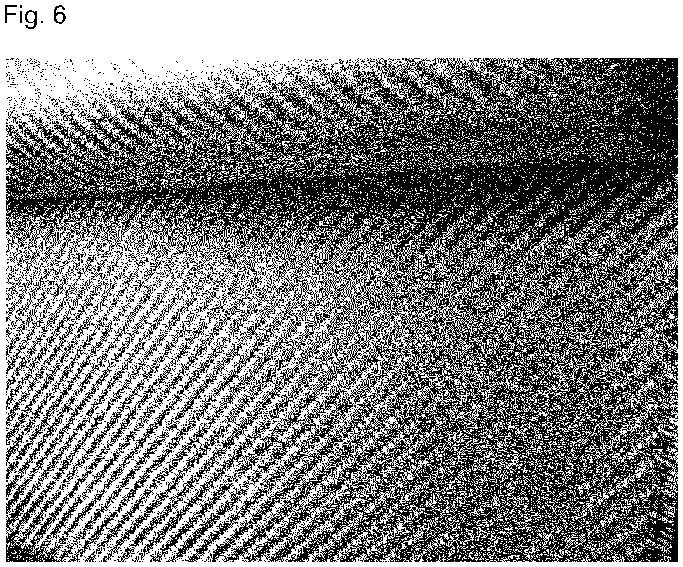

Figur 6 zeigt die Herstellung der Faserverbund-Werkstoffe W (hier: Glasfaser-Gewebe) im Presseneinlauf V25-V28. Deutlich erkennbar ist, dass ein derartiges Herstellungsverfahren eine kontinuierliche Produktion erlaubt. Zudem ist durch die Einprägung des Musters erkennbar, dass der Faserverbund-Werkstoff W auch dreidimensional formbar ist.

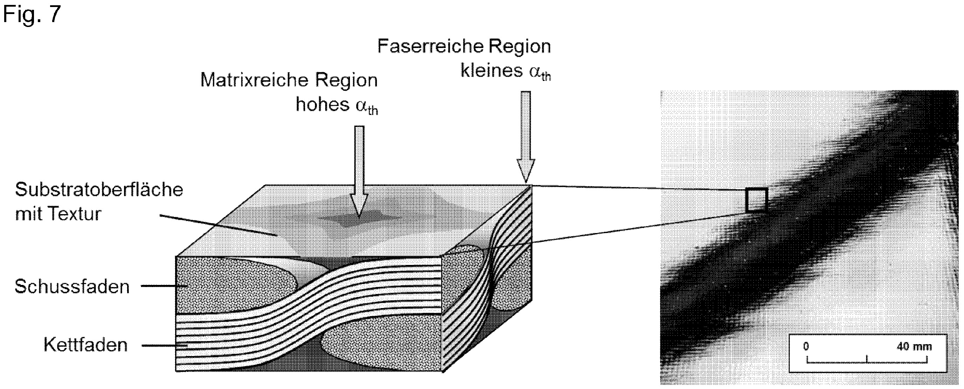

Figur 7 zeigt schematisch die Entstehung von unerwünschter Bildung von Oberflächenwellen (Textur).

### Beispiele

Die nachfolgenden Versuche werden auf einer handelsüblichen Intervall-Heißpresse, welche in der Lage ist einen Faser/Folienverbund aus Polymerfolie, Schmelze oder Pulver herzustellen, zur quasi-kontinuierlichen Herstellung von faserverstärkten thermoplastischen Halbzeugen, Laminaten und Sandwichplatten durchgeführt.
Plattenbreite: 660 mm
Laminat-Dicke: 0,2 bis 9,0 mm
Laminat-Toleranzen: max. ± 0,1 mm entsprechend Halbzeug
Sandwichplattenstärke: max. 30 mm
Ausstoß: ca. 0,1 - 60 m/h, abhängig von Qualität und Bauteildicke
Nennvorschub 5 m/h
Werkzeugdruck: Presseinheit 5-25 bar, für minimale und maximale Werkzeuggröße stufenlos regelbar (optional)
Werkzeugtemperierung: 3 Heiz- und 2 Kühlzonen
Werkzeugtemperatur: bis 400 °C
Werkzeuglänge: 1000 mm
Öffnungsweg Presse: 0,5 bis 200 mm
(Produktionsrichtung: in der Regel rechts nach links)

Technische Daten der Schmelze-Plastifizierung sind:
Diskontinuierlicher Schmelze-Auftrag in Mittellage zur Herstellung von faserverstärkten thermoplastischen Halbzeugen
Schneckendurchmesser: 35mm
Max. Hubvolumen: 192 cm³
Max. Schneckendrehzahl: 350 U/min
Max. Austragsstrom: 108 cm³/s
Max. Austragsdruck: 2406 bar spezifisch
Transparenz wurde an 1 mm Organoblech-Proben in % von weißem Tageslicht (100 %) mit Hilfe eines Transparenzmessgeräts Byk Haze gard i (BYK-gardner, USA) gemäß ASTM D 1003 (etwa ASTM D 1003-13) gemessen.

Die beschriebenen Faserverbund-Werkstoffe (Organobleche), insbesondere mit amorpher, thermoplastischer Matrix eignen sich besonders für die Herstellung von transparenten und transluzenten Formkörper, Folien und Beschichtungen. Einige Beispiele sind nachfolgend aufgezeigt. Wenn nicht anders erwähnt werden die Formteile in Spritzgussverfahren hergestellt.

### Beispiel 1: Herstellung des Faserverbund-Werkstoffs M

40 Gew.-%, bezogen auf den Faserverbund-Werkstoff, eines Acrylnitril-Styrol-Maleinsäureanhydrid-Copolymers als thermoplastische Formmasse A (hergestellt aus: 75 Gew.-% Styrol, 24 Gew.-% Acrylnitril und 1 Gew.-% Maleinsäureanhydrid) wird mit 60 Gew.-%, bezogen auf den Faserverbund-Werkstoff, einer Glas-basierten Verstärkungsfaser mit chemisch reaktiver Funktionalität (Silangruppen) an der Oberfläche [GW 123-580K2 von P-D Glasseiden GmbH] compoundiert.

### Beispiel 2: Herstellung des Faserverbund-Werkstoffs N

65 Gew.-%, bezogen auf den Faserverbund-Werkstoff, eines Acrylnitril-Butadien-Styrol-Copolymer als thermoplastische Formmasse A (ABS hergestellt aus: 45 Gew.-% Butadien, 30 Gew.-% Styrol, 24 Gew.-% Acrylnitril und 1Gew.-% Maleinsäureanhydrid) wird mit 35 Gew.-%, bezogen auf den Faserverbund-Werkstoff, einer Glas-basierten Verstärkungsfaser mit chemisch reaktiver Funktionalität (Silangruppen) an der Oberfläche [GW 123-580K2 von P-D Glasseiden GmbH] compoundiert. Der Faserverbund-Werkstoff wird im Anschluss verrippt.

### Beispiel 3: Herstellung von Formteilen aus den Faserverbund-Werkstoffen M und N

Beispiel A: Waschmaschinenfenster
Beispiel B: Linsenabdeckungen

Es wird eine erhöhte Steifigkeit des Fensters und der Linsenabdeckung gegenüber entsprechenden aus Glas bestehenden Materialien beobachtet. Ferner sind die Organobleche weniger empfindlich gegenüber Kratzern und Druck.

### Beispiel 5: Materialeigenschaften dünner Organobleche

### Gefahrene Thermoplast Kombinationen A:

| | |
|---|---|
| A1 (Vergleich): | S/AN mit 75 % Styrol (S) und 25 % Acrylnitril (AN), Viskositätszahl 60, Mw von 250.000 g/mol (gemessen via Gel Permeations Chromatographie an Standard Säulen mit monodispersen Polystyrol Eichstandards) |
| A2: | S/AN/Maleinsäureanhydrid Copolymer mit der Zusammensetzung (Gew%): 74/25/1, Mw von 250.000 g/mol (gemessen via Gel Permeations Chromatographie an Standard Säulen mit monodispersen Polystyrol Eichstandards) |
| A3: | Mischung aus A2 : A1 = 2 : 1 |
| A4: | Mischung aus A2 : A1 = 1 : 2 |

### Verwendete Faser-Textilien B:

| | |
|---|---|
| B1: | Bidirektionales Glasfasergelege 0/90° (GF-GE) mit Flächengewicht = 590g/m2, |
| | Schuss + Kette = 1200tex [beispielsweise KN G 590.1 von P-D Glasseiden GmbH] |
| B2: | Glasfasergewebe Köper 2/2 (GF-KG) mit Flächengewicht = 576 g/m², Schuss, + Kette = 1200tex |

Die im Zusammenhang mit Versuchen Nr. 1-5 gefahrenen Kombinationen und Parametereinstellungen sind in nachfolgender Tabelle aufgeführt:

**Tabelle 1. Herstellungsbedingungen der Faserverbund-Werkstoffe W**

| Versuchs-Nr. | Composite* | Temperatur-Profil | Pressdruck (bar) | Presszeit (s) | Dicke (mm) |
|---|---|---|---|---|---|
| 1 (Vgl.) | A1+B1 | 220-240-260-160-80 | 20 | 20 | 1 |
| 2 (Vgl.) | A1+B1 | 220-280-300-160-80 | 25 | 30 | 1 |
| 3 | A2+B1 | 240-300-320-160-80 | 20 | 20 | 1 |
| 4 | A3+B1 | 240-300-320-160-80 | 20 | 30 | 1 |
| 5 | A4+B1 | 240-300-320-160-80 | 20 | 30 | 1 |

| | | | | | |
|---|---|---|---|---|---|
| *Komponenten A + B1: 0.465 mm Dicke Textilaufbau, 0.653 mm Dicke Matrixaufbau, Gesamtvolumen Matrix: 22 ml, Faser-Volumenanteil: 41.6 %, Gesamtdichte Halbzeug: 1.669 g/ml, Gesamtdicke Halbzeug: 1.117 mm | | | | | |

### Versuchs-Nr. 1 (Vergleichsversuch)

Die Ergebnisse sind in Figur 1 gezeigt.

*Visuelle Bewertung an der Halbzeug-Oberfläche:*
Makroimprägnierung: abgeschlossen
Mikroimprägnierung: deutlich nicht abgeschlossen

*Mikroskopische Bewertung im Halbzeug-Inneren:*
Matrixschicht in Mittellage: deutlich erkennbar
Matrixschicht in Decklage: am Roving nicht erkennbar
Imprägnierung Kettfäden: mittig unimprägnierte Bereiche, umlaufend leicht imprägniert
Imprägnierung Schussfäden: mittig deutlich unimprägnierte Bereiche, umlaufend leicht imprägniert
Lufteinschlüsse: wenig, nur im Roving
Konsolidierung: ungenügend, Beschädigung Kett- und Schussfäden

### Versuchs-Nr. 2

Die Ergebnisse sind in Figur 2 gezeigt.

*Visuelle Bewertung an der Halbzeug-Oberfläche:*
Makroimprägnierung: abgeschlossen
Mikroimprägnierung: an mehreren Stellen nicht abgeschlossen

*Mikroskopische Bewertung im Halbzeug-Inneren:*
Matrixschicht in Mittellage: erkennbar
Matrixschicht in Decklage: wenig am Roving erkennbar
Imprägnierung Kettfäden: mittig unimprägnierte Bereiche erkennbar, umlaufend teilweise imprägniert, teilweise unimprägniert
Imprägnierung Schussfäden: mittig unimprägnierte Bereiche, umlaufend leicht imprägniert
Lufteinschlüsse: wenig
Konsolidierung: nicht ausreichend, deutliche Beschädigung Schussfäden

### Versuchs-Nr. 3

Die Ergebnisse sind in Figur 3 gezeigt.

*Visuelle Bewertung an der Halbzeug-Oberfläche:*
Makroimprägnierung: abgeschlossen
Mikroimprägnierung: abgeschlossen

*Versuch Nr. 3, Mikroskopische Bewertung im Halbzeug-Inneren:*
Matrixschicht in Mittellage: nicht erkennbar
Matrixschicht in Decklage: gut erkennbar
Imprägnierung Kettfäden: kaum unimprägnierte Bereiche erkennbar, umlaufend gut imprägniert
Imprägnierung Schussfäden: kaum unimprägnierte Bereiche erkennbar, umlaufend gut imprägniert
Lufteinschlüsse: sehr viele, große Blasen erkennbar
Konsolidierung: gut, keine Beschädigungen

### Versuchs-Nr. 4

Die Ergebnisse sind in Figur 4 gezeigt.

*Visuelle Bewertung an der Halbzeug-Oberfläche:*
Makroimprägnierung: abgeschlossen
Mikroimprägnierung: überwiegend abgeschlossen

*Mikroskopische Bewertung im Halbzeug-Inneren:*
Matrixschicht in Mittellage: kaum erkennbar
Matrixschicht in Decklage: erkennbar
Imprägnierung Kettfäden: leicht unimprägnierte Bereiche erkennbar, umlaufend gut imprägniert
Imprägnierung Schussfäden: unimprägnierte Bereiche erkennbar, aber umlaufend imprägniert
Lufteinschlüsse: keine erkennbar
Konsolidierung: befriedigend, mittlere Beschädigungen von Schussfäden erkennbar

### Versuchs-Nr. 5

Die Ergebnisse sind in Figur 5 gezeigt.

*Visuelle Bewertung an der Halbzeug-Oberfläche:*
Makroimprägnierung: abgeschlossen
Mikroimprägnierung: überwiegend abgeschlossen

*Mikroskopische Bewertung im Halbzeug-Inneren:*
Matrixschicht in Mittellage: nicht erkennbar
Matrixschicht in Decklage: erkennbar
Imprägnierung Kettfäden: wenig unimprägnierte Bereiche erkennbar, umlaufend gut imprägniert
Imprägnierung Schussfäden: wenig unimprägnierte Bereiche erkennbar, umlaufend gut imprägniert
Lufteinschlüsse: keine erkennbar
Konsolidierung: teilweise gut, teilweise ungenügend, lokale Beschädigungen von Schussfäden erkennbar

### Zusammenfassung der Versuchsergebnisse

**Tabelle 2. Zusammenfassung Versuche und Bewertung**

| Versuchs-Nr. | Composite* | Maleinsäureanhydrid-Konzentration (Gew %) | Max. Temperatur (°C) | Imprägnation** | | Transparenz (%) | Konsolidierung ** |
|---|---|---|---|---|---|---|---|
| | | | | Macro | Micro | | |
| 1 (Vgl.) | A1+B1 | 0 | 260 | 1 | 5 | 1 | 5 |
| 2 (Vgl.) | A1+B1 | 0 | 300 | 1 | 4 | 3 | 4 |
| 3 | A2+B1 | 1 | 320 | 1 | 1 | 40 | 2 |
| 4 | A3+B1 | 0,66 | 320 | 1 | 2 | 25 | 3 |
| 5 | A4+B1 | 0,33 | 320 | 1 | 2 | 20 | 4 |

| | | | | | | | |
|---|---|---|---|---|---|---|---|
| *Komponenten A + B1: 0.465 mm Dicke Textilaufbau, 0.653 mm Dicke Matrixaufbau, Gesamtvolumen Matrix: 22 ml, Faser-Volumenanteil: 41.6 %, Gesamtdichte Halbzeug: 1.669 g/ml, Gesamtdicke Halbzeug: 1.117 mm **1= perfekt, 2= gut, 3=teilweise, 4= wenig, 5=schlecht/keine | | | | | | | |

**Tabelle 3. Optischer und haptischer Vergleich der erfindungsgemäßen Versuchseinstellungen mit herkömmlichen Organoblechen**

| Versuchs-Nr. | Composite | Maleinsäure-anhydrid-Konzentration (Gew %) | Ober-flächengüte* | Bedruckbarkeit mit 45 mdyne Tinte** | Trans-parenz (%) |
|---|---|---|---|---|---|
| 1 (Vgl) | A1+B1 | 0 | 2 | 1 | 1 |
| 2 (Vgl.) | A1+B1 | 0 | 2 | 1 | 3 |
| 3 | A2+B1 | 1 | 1-2 | 1 | 40 |
| 4 | A3+B1 | 0,66 | 1-2 | 1 | 25 |
| 5 | A4+B1 | 0,33 | 1-2 | 1 | 20 |
| 6 | Bond Laminates Composite aus ca 60 % Glasfaser-Gewebe und 40 % Polyamid | 0 | 4-5 | 1 | 0 |
| 7 | Composite aus ca. 60 % Glasfaser-Gewebe und 40 % Polypropylen | 0 | 4-5 | 5 | 0 |

| | | | | | |
|---|---|---|---|---|---|
| *1= vollständig glatt, 2= weitgehend glatt, 3= leicht rau, 4= mäßig rau, 5= Fasern sind deutlich zu spüren **1= perfekt, 2= gut, 3=teilweise, 4= wenig, 5=schlecht/keine | | | | | |

### Versuchs-Nr. 6

Die Ergebnisse sind in Tabelle 5 gezeigt.

Die im Zusammenhang mit Versuch Nr. 6 gefahrenen Kombinationen und Parametereinstellungen sind in nachfolgender Tabelle aufgeführt:

**Tabelle 4. Herstellungsbedingungen der Faserverbund-Werkstoffe W**

| Versuchs-Nr. | Composite* | Temperatur-Profil | Pressdruck (bar) | Presszeit (s) | Dicke (mm) |
|---|---|---|---|---|---|
| 4 | A1+B1 | 220-240-300-160-80 | 20 | 20 | 1 |
| 12 | A3+B1 | 220-240-300-160-80 | 20 | 20 | 1 |
| 28 | A1+B2 | 240-300-320-160-80 | 20 | 20 | 1 |
| 26 | A3+B2 | 240-300-320-160-80 | 20 | 30 | 1 |

| | | | | | |
|---|---|---|---|---|---|
| *Komponenten A + B1: 0.465 mm Dicke Textilaufbau, 0.653 mm Dicke Matrixaufbau, Gesamtvolumen Matrix: 22 ml, Faser-Volumenanteil: 41.6 %, Gesamtdichte Halbzeug: 1.669 g/ml, Gesamtdicke Halbzeug: 1.117 mm | | | | | |

**Tabelle 5. Vergleich der Biegefestigkeit.**

| Versuchs-Nr. | 8 | 9 | Delta (%) | 10 | 11 | Delta (%) |
|---|---|---|---|---|---|---|
| Verstärkung | Gelege (B1), Kettrichtung | | | Gewebe Köper 2/2 (B2) | | |
| Matrix | A1 | A3 | | A1 | A3 | |
| Biegeprüfung: | | | | | | |
| Modul (GPa) | 19,7 | 22,5 | 14 | 21,1 | 19,6 | -7 |
| Bruchspannung (MPa) | 211 | 462 | 119 | 423 | 528 | 25 |

Tabelle 5 zeigt die in einer Versuchsreihe erhaltenen Faserverbund-Werkstoffe W. Es wurden jeweils reines SAN (A1) sowie ein S/AN/Maleinsäureanhydrid Copolymer (A2) mit einer handelsüblichen Gelege- und Gewebeverstärkung in einem identischen Prozess kombiniert und geprüft. Der Faservolumengehalt der Verbunde betrug 42%. Die verbesserte Qualität der Imprägnierung und Verbindung zwischen Faser und Matrix zeigt sich nicht an der Biegesteifigkeit, aber deutlich an der Biegefestigkeit (Bruchspannung) der untersuchten Proben.

### Versuchs-Nr. 7

Die Ergebnisse sind in Tabelle 6 gezeigt.

**Tabelle 6. Vergleich der Wellentiefe Wt.**

| Versuchs-Nr. | 12 | 13 | 14 |
|---|---|---|---|
| Verstärkung | Faser (B3) | | |
| Matrix (A4) | SAN | PC OD | PA6 |
| Mittelwert Wellentiefe MW Wt (µm) | 5.2 | 11.7 | 12.3 |
| Maximalwert Wellentiefe Max Wt (µm)) | 7.8 | 22.3 | 17.2 |

Hierbei sind die Komponenten wie folgt definiert:
- SAN:: SAN-MA-Terpolymer, Gewichtszusammensetzung (Gew.-%): 73/25/2, Mw: 250.000 g/mol (gemessen via Gelpermeations-Chromatographie an Standard-säulen mit monodispersen Polystyrol-Standards), MVR: 15-25 cm³/10 min bei 220°C/10kg (IS01133), Viskositätszahl (in DMF) J = 61-67 ml/g
- PC OD:: leichtfließendes, amorphes Polycarbonat optischer Grade für optische Discs)
- PA6:: teilkristallines, leichtfließendes Polyamid 6
- Fasern (B3):: Glasfasergewebe Köper 2/2 (GF-KG) mit Flächengewicht = 300 g/m², Schuss, + Kette = 320tex

Wie aus Tabelle 6 ersichtlich ist, ist die Verwendung von SAN-MA-Terpolymer besonders vorteilhaft bezüglich des Erhalts einer geringen Wellentiefe der Oberfläche. PC OD zeigte sich als spannungsrissempfindlich.

### Weitere Versuche zur Biegespannung an mit Flächengebilden verstärkten FaserVerbund-Wirkstoffen

Die Komponenten sind wie oben definiert. Die Biegespannung und das Biegemodul wurden nach DIN 14125:2011-05 bestimmt.

Die Kombinationen und Parametereinstellungen zu dem in Anspruch 1 beschriebenen Verfahren sind in nachfolgender Tabelle aufgeführt:

**Tabelle 7: Zusammensetzungen Vgl. 1, Vgl. 2, Vgl. 10 und Vgl. 15 sowie der erfindungsgemäßen Zusammensetzungen V3 bis V9 und V11 bis V14. X: Gewichtsverhältnis Komponente A : B = 60 : 40**

| Nr. | A1 | A2 | A3 | A4 | B1 | B2 | T[°C] | t [s] |
|---|---|---|---|---|---|---|---|---|
| Vgl. 1 | X | | | | X | | 260 | 20-30 |
| Vgl. 2 | X | | | | X | | 300 | 30-30 |
| V3 | | X | | | X | | 280 | 20-30 |
| V4 | | X | | | X | | 280 | 40 |
| V5 | | X | | | X | | 320 | 30-30 |
| V6 | | | X | | X | | 300 | 20-30 |
| V7 | | | X | | X | | 320 | 20-30 |
| V8 | | | | X | X | | 310 | 20-30 |
| V9 | | | | X | X | | 320 | 20-30 |
| Vgl. 10 | X | | | | X | | 320 | 20-30 |
| V11 | | X | | | X | | 320 | 20-30 |
| V12 | | X | | | | X | 320 | 20-30 |
| V13 | | | X | | | X | 320 | 20-30 |
| V14 | | | | X | | X | 320 | 20-30 |
| Vgl. 15 | X | | | | | X | 320 | 20-30 |

In Tabelle 7 werden die Bedingungen der durchgeführten Versuche dargestellt. Hierbei wurden die Edukte, sowie die Temperatur und die Presszeit variiert. Der Pressdruck betrug in allen Versuchsreihen ca. 20 bar.

**Tabelle 8: Mittelwerte der maximalen Biegespannung der Kett- und Schussrichtung der hergestellten Organobleche gemäß den Mischungen Vgl. 2, V5, V7, V9, Vgl. 10, V12 bis V14 und Vgl. 15, wobei die Herstellungstemperatur je mindestens 300 °C betrug.**

| Nr. | Faserrichtung | Mittelwerte der maximale Biegespannung [MPa] |
|---|---|---|
| Vgl. 2 | Kettrichtung | 211,23 |
| | Schuss richtung | 184,94 |
| V5 | Kettrichtung | 670,48 |
| | Schuss richtung | 271,05 |
| V7 | Kettrichtung | 590,98 |
| | Schuss richtung | 301,21 |
| V9 | Kettrichtung | 371,73 |
| | Schuss richtung | 244,62 |
| Vgl. 10 | Kettrichtung | 319,8 |
| | Schuss richtung | 236,01 |
| V12 | Kettrichtung | 556,15 |
| | Schuss richtung | 484,24 |
| V13 | Kettrichtung | 528,96 |
| | Schuss richtung | 386,83 |
| V14 | Kettrichtung | 513,95 |
| | Schuss richtung | 413,86 |
| Vgl. 15 | Kettrichtung | 423,03 |
| | Schussrichtung | 301,40 |

Die in Tabelle 8 dargestellten Werte sind das Mittel von je neun Messungen.

Tabelle 8 zeigt, dass die erfindungsgemäßen Organobleche V5, V7, V9, V12, V13 und V14 eine höhere mittlere maximale Biegespannung aufweisen als die Organobleche, welche eine Matrix enthaltend 75 Gew.-% Styrol (S) und 25 Gew.-% Acrylnitril (AN), aufweist (Vgl. 10 und Vgl. 15). Auch der Vergleich von V9 mit Vgl. 10 zeigt, dass unter den gleichen Bedingungen (T=320 °C und t=30 s) das erfindungsgemäße Organoblech eine größere Biegespannung sowohl in der Kett- als auch in der Schussrichtung aufweist.

Es zeigt sich, dass durch das Verfahren zur Herstellung des Faserverbund-Werkstoffs mit einer thermoplastischen Formmasse A, Verstärkungsfasern B verbesserte Produkte erhalten werden können.

### Weitere Untersuchung von Mehrschichtigen Faserverbund-Werkstoffen

Technische Daten der Intervall-Heißpresse (IVHP):
Quasi-kontinuierliche Herstellung von faserverstärkten thermoplastischen Halbzeugen, Laminaten
und Sandwichplatten
Plattenbreite: 660 mm
Laminat-Dicke: 0,2 bis 9,0 mm
Laminat-Toleranzen: max. ± 0,1 mm entsprechend Halbzeug
Sandwichplattenstärke: max. 30 mm
Ausstoß: ca. 0,1 - 60 m/h, abhängig von Qualität und Bauteildicke
Nennvorschub 5 m/h
Werkzeugdruck: Presseinheit 5-25 bar, für minimale und maximale Werkzeuggröße stufenlos regelbar (optional)
Werkzeugtemperierung: 3 Heiz- und 2 Kühlzonen
Werkzeugtemperatur: bis 400 °C
Werkzeuglänge: 1000 mm
Öffnungsweg Presse: 0,5 bis 200 mm
Produktionsrichtung: rechts nach links

Technische Daten der Schmelze-Plastifizierung:
Diskontinuierlicher Schmelzeauftrag in Mittellage zur Herstellung von faserverstärkten thermoplastischen
Halbzeugen
Schneckendurchmesser: 35mm
Max. Hubvolumen: 192 cm³
Max. Schneckendrehzahl: 350 U/min
Max. Austragsstrom: 108 cm³/s
Max. Austragsdruck: 2406 bar spezifisch
hierbei:
   Schmelzevolumne: 22 ccm
   isobar = druckgesteuerter Pressprozess
   isochor = volumengesteuerter Pressprozess
T [°C] = Temperatur der Temperaturzonen* (*Die Presse verfügt über 3 Heiz- und 2 Kühlzonen. die Angabe bezieht in Produktionsrichtung)
p [bar] = Pressdruck pro Zyklus: Isochor 20
s [mm] = Wegbegrenzung Pressdicke: 1.1 mm
Temperaturprofil:
   (i) 210 bis 245°C, daher ca. 220°C
   (ii) 300 bis 325°C, daher ca. 300°C
   (iii) 270 bis 320°C, daher ca. 280 bis 320°C
   (iv) 160 bis 180°C
   (v) 80°C
t [sec] = Presszeit pro Zyklus: 20-30 s
Aufbau/Laminierung: 6-lagiger Aufbau mit Schmelze-Mittelschicht; Herstellungsverfahren: Schmelze-Direkt (SD)

Matrix-Komponenten A:
M1 (SAN Typ): Styrol-Acrylnitril-Maleinsäureanhydrid- (SAN-MA-) Terpolymer (S/AN/MA: 74/25/1) mit einem MA-Anteil von 1 Gew.-% und einem MVR von 22 cm³/10 min bei 220°C/10kg (gemessen nach ISO1133);
M1b entspricht der vorgenannten Komponente M1, wobei der Matrix zusätzlich 2 Gew.-% Industrieruß beigemischt wurden.
M2 (SAN Typ): Styrol-Acrylnitril-Maleinsäureanhydrid- (SAN-MA-) Terpolymer (S/AN/MA: 73/25/2,1) mit einem MA-Anteil von 2,1 Gew.-% und einem MVR von 22 cm³/10 min bei 220°C/10kg (gemessen nach ISO1133);
M2b entspricht der vorgenannten Komponente M2, wobei der Matrix zusätzlich 2 Gew.-% Industrieruß beigemischt wurden.
M3 (SAN Typ): Blend aus 33 Gew.-% M1 und 67 Gew.-% des SAN-Copolymers Luran VLN, daher 0,33 Gew.-% MaleinsäureanhydridMA) im gesamten Blend;
M3b entspricht der vorgenannten Komponente M3, wobei der Matrix zusätzlich 2 Gew.-% Industrieruß beigemischt wurden.
   - PA6:: teilkristallines, leichtfließendes Polyamid Durethan B30S
   - PD(OD):: leichtfließendes, amorphes Polycarbonat optischer Grade für optische Discs);

Faser-Komponenten B:
Glasfilament-Köpergewebe (Kurzbezeichnungen: GF-KG(LR) bzw. LR), Köperbindung 2/2, Flächengewicht 290 g/m², Roving EC9 68tex, Finish TF-970, Lieferbreite 1000 mm (Typ: 01102 0800-1240; Hersteller: Hexcel, erhalten von: Lange + Ritter)
Glasfilament-Köpergewebe (Kurzbezeichnungen: GF-KG(PD) bzw. PD), Köperbindung 2/2, Flächengewicht 320 g/m², Roving 320tex, Finish 350, Lieferbreite 635 mm (Typ: EC14-320-350, Hersteller und Lieferant: PD Glasseide GmbH Oschatz)
Glasfilament-Gelege (Kurzbezeichnung: GF-GE(Sae) bzw. Sae) 0°/45°/90°/-45°, Flächengewicht 313 g/m², Haupt-Roving 300tex, Finish PA-Schlichte, Lieferbreite 655mm (Typ: X-E-PA-313-655, Nr. 7004344, Hersteller und Lieferant: Saertex GmbH&Co. KG)
Sae n.s. = Glasfilament-Gelege 300 g/m², Herstellerbezeichnung: Saertex new sizing, +45°/-45°/+45°/-45°
Glasfaservlies (Kurzbezeichnung: GV50), Flächengewicht 50 g/m², Faserdurchmesser 10 µm, Lieferbreite 640 mm (Typ: Evalith S5030, Hersteller und Lieferant: Johns Manville Europe)

### Visuelle Bewertung

Alle hergestellten Faserverbund-Werkstoffe ließen sich jeweils als (groß)flächige Organobleche in einem Endlosverfahren herstellen, die problemlos (in kaschierbare, transportübliche Maße wie etwa 1 m x 0,6 m) die zuschneidbar waren. Bei den transparenten Faserverbund-Werkstoffen war das eingebettete Fasermaterial bei detaillierter Betrachtung im Gegenlicht gerade erkennbar. Bei den Faserverbund-Werkstoffen mit (schwarz) eingefärbter Matrix war das eingebettete Fasermaterial auch bei näherer optischer Betrachtung im Gegenlicht nicht/kaum erkennbar.

### Mikroskopische Bewertung

Hierbei wurden Fehlstellen (Lunker, Einfall, etc.) über Auflichtmikroskopie und die Oberflächengüte über konfokale Laser-Scannning-Mikroskopie (LSM) bewertet. Mittels LSM wurde eine Aufsicht einer drei-dimensionalen (3D-)Höhenaufnahme (7,2 mm x 7,2 mm) des lokalen Messbereichs und eine zweidimensionalen (2D-)Darstellung der Höhenunterschiede nach Skalierung und Anwendung verschiedener Profilfilter erstellt. Messfehler und einen generellen Verzug/Schieflage der Probe wurden durch den Einsatz von Profilfiltern (Rauschfilter und Verkippungsfilter) ausgeglichen. Das 2D-Höhenprofil der Aufnahme wurde über definierte Messlinien durch integrierte Software in Linienprofile übertragen und computer-gestützt ausgewertet.

Es wurden Faserverbund-Werkstoffe mit jeweils vier in die jeweilige Matrix eingebetteten Lagen des entsprechenden Flächengebildes an Fasern (hier GF-KG(PD)(4) bzw. Sae(4)) hergestellt. Um die Vergleichbarkeit der Proben weiter zu erhöhen, wurden auf die hergestellten Faserverbund-Werkstoffe jeweils beidseitig ein dünnes Glasfaservlies (GV50, siehe oben) aufgebracht. Dieses hatte keinen merklichen Einfluss auf die mechanischen Eigenschaften.

Die Mittlere Wellentiefe (MW Wt) und der Raumittenwert (Ra) wurden für zahlreiche Faserverbund-Werkstoffe ermittelt. Es zeigte sich, dass die MW Wt für alle Faserverbund-Werkstoffe, bei denen die Matrix eine funktionale Komponente enthält, die mit den Fasern reagieren kann, deutlich < 10 µm ist, wohingegen sie bei Faserverbund-Werkstoffen mit vergleichbaren PA6- und PD(OD)-Matrices deutlich <10 µm ist. Auch die ermittelten Raumittenwerte waren deutlich niedriger für erfindungsgemäße Faserverbund-Werkstoffe. Beispielhaft zeigen dies die untenstehenden, gemessenen Werte.

**Tabelle 9. Messergebnisse der LSM-Vermessung mit SAN-Matrixsystem - Wellentiefe (Wt) und Raumittenwert (Ra)**

| | SAN(1) | | | | PC(1) | PA6(1) |
|---|---|---|---|---|---|---|
| Aufbau | +GF-KG(PD)(4) | | | | | |
| Komponenten | M1b+PD | M2+PD | M2b+PD | M3b+PD | PC(OD)+ PD | PA6+ PD |
| MW Wt | 7,141 | 7,187 | 5,181 | 5,425 | 11,745 | 12,323 |
| MW Ra | 3,995 | 4,415 | 4,17 | 3,451 | 6,406 | 4,968 |

Ebenso deutlich wurde dies, wenn anstelle des Gewebes ein Gelege (wie Sae) eingesetzt wird:

**Tabelle 10. Messergebnisse der LSM-Vermessung mit SAN-Matrixsystem - Wellentiefe (Wt) und Raumittenwert (Ra)**

| Aufbau | SAN(1) | | PA6(1) |
|---|---|---|---|
| Aufbau | +Sae(4) | | |
| Komponenten | M 1 b+Sae | M2b+Sae | |
| MW Wt | 5,535 | 5,205 | 17,05 |
| MW Ra | 4,261 | 4,24 | 4,861 |

In weiteren Versuchen wurde die Festigkeit in Kett- und in Schussrichtung gesondert untersucht. Es konnte gezeigt werden, dass die Faserverbund-Werkstoffe sowohl in Kett- wie auch in Schussrichtung sehr stabil sind. In Kettrichtung sind die faserverbund-Werkstoffe in der Regel noch stabiler als in Schussrichtung.

### Mechanische Eigenschaften

### Matrix-Komponenten A

Die Matrix-Komponenten A sind wie oben beschrieben.
**Faser-Komponenten B** (sofern nicht oben beschrieben)
FG290 = Glasfilament-Gewebe 290g/m², Herstellerbezeichnung: Hexcel HexForce^{®} 01202 1000 TF970
FG320 = Glasfilament-Gewebe 320g/m², Herstellerbezeichnung: PD Glasseide GmbH Oschatz EC 14-320-350
Sae = MuAx313, Glasfilament-Gelege 300g/m², Herstellerbezeichnung: Saertex X-E-PA-313-655
Sae n.s. = Glasfilament-Gelege 300g/m², Herstellerbezeichnung: Saertex new sizing, +45°/-45°/+45°/-45°
Anzahl an Schichten (z.B. 4x = vier Schichten des jeweiligen Fasergeleges bzw. der jeweiligen Fasern)

Hergestellt wurden folgende transparente Faserverbund-Werkstoffe, in die jeweils flächiges Fasermaterial eingebracht wurde. Die hergestellten Faserverbund-Werkstoffe wiesen jeweils eine Dicke von etwa 1,1 mm auf. Um die Vergleichbarkeit der Proben weiter zu erhöhen, wurden auf die hergestellten Faserverbund-Werkstoffe jeweils beidseitig ein dünnes Glasfaservlies (GV50, siehe oben) aufgebracht. Dieses hat keinen merklichen Einfluss auf die mechanischen oder optischen Eigenschaften. Für die Proben wurden folgende Biegefestigkeiten nach DIN EN ISO 14125 ermittelt:

**Tabelle 11. Transparente Faserverbund-Werkstoffe - Biegefestigkeit**

| Nr. | Aufbau | Glasanteil [g/m2] | Matrix | Dicke [mm] | E-Modul | Biegefestigkeit |
|---|---|---|---|---|---|---|
| F/T_1 | 4xFG290 | 1260 | M2 | 1,09 | 18,41 | 658,89 |
| F/T_2 | 4xFG320 | 1380 | M2 | 1,09 | 18,17 | 634,32 |
| F/T_3 | 4xSae | 1352 | M2 | 1,16 | 18,44 | 444,33 |
| F/T_4 | Sae n.s. | | M2 | 1,17 | 15,93 | 621,04 |
| F/T_5 | 4xFG320 | 1380 | PC(OD) | 1,14 | 23,36 | 377,97 |

Hergestellt wurden zudem folgende schwarz eingefärbte Faserverbund-Werkstoffe, bei denen der Matrix 2 Gew.-% Industrieruß beigemischt und in die jeweils flächiges Fasermaterial eingebracht wurde. Die hergestellten Faserverbund-Werkstoffe wiesen jeweils eine Dicke von etwa 1,1 mm auf. Um die Vergleichbarkeit der Proben weiter zu erhöhen, wurden auf die hergestellten Faserverbund-Werkstoffe jeweils beidseitig ein dünnes Glasfaservlies (GV50, siehe oben) aufgebracht. Dieses hat keinen merklichen Einfluss auf die mechanischen oder optischen Eigenschaften. Für die Proben wurden folgende Biegefestigkeiten nach DIN EN ISO 14125 ermittelt:

**Tabelle 12. Intransparente Faserverbund-Werkstoffe - Biegefestigkeit**

| Nr. | Aufbau | Glasanteil [g/m2] | Matrix | Dicke [mm] | E-Modul | Biegefestigkeit |
|---|---|---|---|---|---|---|
| F/S_1 | 4xFG290 | 1260 | M2 | 1,07 | 21,61 | 661,73 |
| F/S_2 | 4xFG320 | 1380 | M2 | 1,20 | 22,70 | 673,99 |
| F/S_3 | 4xSae | 1352 | M2 | 1,15 | 14,92 | 385,21 |
| F/S_4 | 4xSae | 1352 | PA6 | 1,13 | 14,30 | 477,77 |
| F/S_5 | 4xFG320 | 1380 | PA6 | 1,11 | 16,95 | 471,97 |

Zusammenfassend zeigte sich, dass die eingesetzten Gewebe (FG290 und FG320) zu Faserverbund-Werkstoffen mit besonders hoher Biegefestigkeit verarbeitet werden können. Die erfindungsgemäßen Faserverbund-Werkstoffe, bei denen die Matrix eine mit den Fasern reagierende Komponenten (hier: Maleinsäureanhydrid (MA)) enthält, weisen eine signifikant höhere Biegefestigkeit auf als die Vergleichsformmassen ohne eine solche Komponente, wie etwa PC(OD) oder PA6.

Im Vergleich dazu wurde für den nicht-erfindungsgemäßen, mit Kurzglasfasern verstärkten Faserverbund-Werkstoff Luran 378P G7 lediglich eine Biegefestigkeit von 150 MPa gefunden, daher eine deutlich niedrigere Biegefestigkeit.

Zusätzlich wurde für die Faserverbund-Werkstoffe die Schlagzähigkeit bzw. das Durchstoßverhalten (Dart Test nach ISO 6603) ermittelt. Auch hier zeigten die Faserverbund-Werkstoffe eine hohe Stabilität von Fm >3000 N.

### Optionale Weiterverarbeitung

Es konnte auch experimentell gezeigt werden, dass die erhaltenen Faserverbund-Werkstoffe gut zu dreidimensionalen Halbzeugen umformbar waren, wie beispielsweise zu halbschalenförmigen Halbzeugen. Es zeigte sich zudem, dass die erhaltenen Faserverbund-Werkstoffe bedruckbar und kaschierbar waren.

### Zusammenfassung der Versuchsergebnisse

Die Evaluierung von unterschiedlichen Textilsystemen auf Glasfaserbasis mit unterschiedlichen Matrixsystemen zu einem Faserverbund-Werkstoff (Organoblech) hat gezeigt, dass gute Faserverbund-Werkstoffe (als Organobleche und daraus hergestellten Halbzeugen) reproduzierbar hergestellt werden können. Diese können farblos oder farbig hergestellt werden. Die Faserverbund-Werkstoffe zeigten gute bis sehr gute optische, haptische und mechanische Eigenschaften (etwa bezüglich ihrer Biegefestigkeit und Durchstoßfestigkeit). Mechanisch zeigten die Gewebe etwas größere Festigkeit und Steifigkeit als Gelege. Die Styrol-Copolymer-basierten Matrices (SAN-Matrices) führten tendenziell zu besseren Faserverbund-Werkstoffen bezüglich der den mechanischen Kennwerte als die alternativen Matrices wie PC und PA6. Die erfindungsgemäßen Faserverbund-Werkstoffe ließen sich halb- bzw. vollautomatisch mittels eines Endlosverfahrens herstellen. Die erfindungsgemäßen Faserverbund-Werkstoffe (Organobleche) lassen sich gut zu dreidimensional zu Halbzeugen umformen.

## Patentansprüche

1. Verwendung eines thermoplastischen Faserverbund-Werkstoffs, enthaltend:
a) mindestens eine thermoplastische Formmasse A als Matrix,
b) mindestens eine Lage aus Verstärkungsfasern B, und
c) optional mindestens ein Additiv C,
wobei die mindestens eine Lage aus Verstärkungsfasern B in die thermoplastische Formmasse A eingebettet ist, und
wobei die thermoplastische Formmasse A mindestens eine chemisch reaktive Funktionalität aufweist, welche während des Herstellungsprozesses des Faserverbund-Werkstoffs mit chemischen Gruppen an der Oberfläche der Verstärkungsfaser-Komponente B reagiert,
zur Herstellung von lichtdurchlässigen Formkörpern, Folien und Beschichtungen, dadurch charakterisiert,
dass die als Matrix fungierende thermoplastische Formmasse A lichtdurchlässig ist und der Faserverbund-Werkstoff gegenüber vergleichbaren Faserverbund-Werkstoffen mit Matrices, die keine chemisch reaktive Funktionalität aufweisen, gemessen bei 1 mm Schichtdicke des jeweiligen Faserverbund-Werkstoffs eine um mindestens 20% höhere Lichtdurchlässigkeit für weißes Licht, erzeugt mittels einer Lampe nach DIN EN 12464 mit einer Farbtemperatur von 5300 bis 7000 Kelvin, besitzt,
dass die chemisch reaktive Funktionalität der thermoplastischen Formmasse A auf Komponenten ausgewählt aus der Gruppe bestehend aus Maleinsäureanhydrid-, N-Phenylmaleinimid- und Glycidyl(meth)acrylat-Funktion basiert,
dass die Verstärkungsfasern B an der Oberfläche eine oder mehrere der chemisch reaktiven Funktionalitäten aus der Gruppe bestehend aus: Hydroxy-, Ester- und Amino-Gruppen enthalten, und
dass die Verstärkungsfasern B als Flächengebilde schichtweise in den Faserverbund-Werkstoff eingebettet sind.

2. Verwendung eines thermoplastischen Faserverbund-Werkstoffs gemäß Anspruch 1, enthaltend
a) 30 bis 95 Gew.-%, insbesondere 38 bis 70 Gew.-% einer thermoplastischen Formmasse A,
b) 5 bis 70 Gew.-%, insbesondere 29,9 bis 61,9 Gew.-% einer Verstärkungsfaser B, und
c) 0 bis 40 Gew.-%, insbesondere 0,1 bis 25 Gew.-%, des Additivs C.

3. Verwendung eines thermoplastischen Faserverbund-Werkstoffs gemäß Anspruch 1 oder 2, wobei die als Matrix M eingesetzte thermoplastische Formmasse A auf einem Styrol-Copolymer basiert und amorph ist.

4. Verwendung eines thermoplastischen Faserverbund-Werkstoffs gemäß einem der Ansprüche 1 bis 3, wobei die thermoplastische Formmasse A ausgewählt ist aus der Gruppe bestehend aus: Styrol-Acrylnitril-Copolymere, α-Methylstyrol-Acrylnitril-Copolymere, schlagzäh modifizierte Acrylnitril-Styrol-Copolymere, sowie Blends der genannten Copolymere mit Polycarbonat oder Polyamid.

5. Verwendung eines thermoplastischen Faserverbund-Werkstoffs gemäß Anspruch 4, wobei schlagzäh modifizierte Acrylnitril-Styrol-Copolymere ausgewählt sind aus der Gruppe bestehend aus Acrylnitril-Butadien-Styrol-Copolymeren (ABS) und Acrylnitril-Styrol-Acrylester-Copolymeren (ASA).

6. Verwendung eines Faserverbund-Werkstoffs gemäß einem der Ansprüche 1 bis 5, wobei die thermoplastische Formmasse A mindestens 0,1 Gew.-% an Monomeren mit einer chemisch reaktiven Funktionalität, bezogen auf die Menge an Komponente A, enthält.

7. Verwendung eines thermoplastischen Faserverbund-Werkstoffs gemäß einem der Ansprüche 1 bis 6, wobei die Verstärkungsfasern B aus Glasfasern bestehen, welche als chemisch reaktive Funktionalität Silanolgruppen an der Oberfläche enthalten.

8. Verwendung eines thermoplastischen Faserverbund-Werkstoffs gemäß einem der Ansprüche 1 bis 7, wobei Komponente A hergestellt wird aus 65 bis 80 Gew.- % (α-Methyl)Styrol, 19,9 bis 32 Gew.-% Acrylnitril und 0,1 bis 3 Gew.-% Maleinsäureanhydrid, wobei die Verstärkungsfasern B in Form eines Geleges, eines Gewebes, einer Matte, eines Vlieses oder eines Gewirkes eingesetzt werden.

9. Verwendung eines thermoplastischen Faserverbund-Werkstoffs gemäß einem der Ansprüche 1 bis 7, wobei die thermoplastische Formmasse A hergestellt wird aus 35 bis 70 Gew.-% mindestens eines konjugierten Diens, insbesondere Butadien, 20 bis 50 Gew.-% mindestens eines vinylaromatischen Monomers , insbesondere Styrol, und 9,9 bis 38 Gew.-% Acrylnitril sowie 0,1 bis 5 Gew.-% eines Monomers A-I, welches eine chemisch reaktive Funktionalität aufweist, insbesondere Maleinsäureanhydrid, und wobei der Faserverbund-Werkstoff eine Dicke von < 10 mm, vorzugsweise von < 2 mm, besonders von < 1 mm aufweist.

10. Verwendung eines thermoplastischen Faserverbund-Werkstoffs gemäß einem der Ansprüche 1 bis 9, wobei der Faserverbund-Werkstoff eine Verrippung oder einen Sandwichaufbau aufweist.

11. Verwendung eines thermoplastischen Faserverbund-Werkstoffs gemäß einem der Ansprüche 1 bis 10, wobei der Faserverbund-Werkstoff schichtartig aufgebaut ist und mehr als zwei Schichten enthält.

12. Verwendung eines thermoplastischen Faserverbund-Werkstoffs gemäß einem der Ansprüche 1 bis 11, wobei Komponente A hergestellt wird aus 65 bis 80 Gew.-% (a-Methyl)Styrol,
19,9 bis 32 Gew.-% Acrylnitril und
0,1 bis 3 Gew.-% Maleinsäureanhydrid,
wobei die Verstärkungsfasern B in Form eines Geleges, eines Gewebes, einer Matte, eines Vlieses oder eines Gewirkes eingesetzt werden,
wobei der Faserverbund-Werkstoff schichtartig aufgebaut ist und mehr als zwei Schichten enthält und eine Verrippung oder einen Sandwichaufbau aufweist.

13. Verwendung eines thermoplastischen Faserverbund-Werkstoffs gemäß einem der Ansprüche 1 bis 12 zur Herstellung von Fenstern.

14. Verwendung eines thermoplastischen Faserverbund-Werkstoffs gemäß einem der Ansprüche 1 bis 12, zur Herstellung von transparenten Gehäusen oder transparenten Einrichtungsgegenständen.

15. Transparente Formkörpern, Folien oder Beschichtungen, enthaltend einen thermoplastischen Faserverbund-Werkstoff gemäß einem der Ansprüchen 1 bis 12.

## Claims

1. Use of a thermoplastic fibre composite material, containing:
a) at least one thermoplastic moulding compound A as matrix,
b) at least one ply of reinforcing fibres B, and
c) optionally at least one additive C,
wherein the at least one ply of reinforcing fibres B is embedded into the thermoplastic moulding compound A, and
wherein the thermoplastic moulding compound A has at least one chemically reactive functionality which reacts with chemical groups on the surface of the reinforcing-fibre component B during the production process of the fibre composite material,
for the production of light-transmissive mouldings, films and coatings,
**characterized**
**in that** the thermoplastic moulding compound A functioning as matrix is light-transmissive and the fibre composite material has a light transmissibility for white light, generated by means of a lamp in accordance with DIN EN 12464 having a colour temperature of 5300 to 7000 kelvin, that is at least 20% higher with respect to comparable fibre composite materials with matrices not having any chemically reactive functionality, measured at a layer thickness of 1 mm of the respective fibre composite material,
**in that** the chemically reactive functionality of the thermoplastic moulding compound A is based on components selected from the group consisting of maleic anhydride function, N-phenylmaleimide function and glycidyl (meth)acrylate function,
**in that** the reinforcing fibres B contain, on the surface, one or more of the chemically reactive functionalities from the group consisting of: hydroxy, ester and amino groups, and
**in that** the reinforcing fibres B are embedded as a sheetlike structure in layers into the fibre composite material.

2. Use of a thermoplastic fibre composite material according to Claim 1, containing
a) 30% to 95% by weight, in particular 38% to 70% by weight, of a thermoplastic moulding compound A,
b) 5% to 70% by weight, in particular 29.9% to 61.9% by weight, of a reinforcing fibre B, and
c) 0% to 40% by weight, in particular 0.1% to 25% by weight, of the additive C.

3. Use of a thermoplastic fibre composite material according to Claim 1 or 2, wherein the thermoplastic moulding compound A used as matrix M is based on a styrene copolymer and is amorphous.

4. Use of a thermoplastic fibre composite material according to any of Claims 1 to 3, wherein the thermoplastic moulding compound A is selected from the group consisting of: styrene-acrylonitrile copolymers, α-methylstyrene-acrylonitrile copolymers, impact-modified acrylonitrile-styrene copolymers, and blends of the copolymers mentioned with polycarbonate or polyamide.

5. Use of a thermoplastic fibre composite material according to Claim 4, wherein impact-modified acrylonitrile-styrene copolymers are selected from the group consisting of acrylonitrile-butadienestyrene copolymers (ABS) and acrylonitrile-styrene-acrylate copolymers (ASA).

6. Use of a fibre composite material according to any of Claims 1 to 5, wherein the thermoplastic moulding compound A contains at least 0.1% by weight of monomers having a chemically reactive functionality, based on the amount of component A.

7. Use of a thermoplastic fibre composite material according to any of Claims 1 to 6, wherein the reinforcing fibres B consist of glass fibres containing silanol groups on the surface as chemically reactive functionality.

8. Use of a thermoplastic fibre composite material according to any of Claims 1 to 7, wherein component A is produced from 65% to 80% by weight of (a-methyl)styrene, 19.9% to 32% by weight of acrylonitrile and 0.1% to 3% by weight of maleic anhydride, wherein the reinforcing fibres B are used in the form of a laid scrim, a woven fabric, a mat, a nonwoven or a knitted fabric.

9. Use of a thermoplastic fibre composite material according to any of Claims 1 to 7, wherein the thermoplastic moulding compound A is produced from 35% to 70% by weight of at least one conjugated diene, in particular butadiene, 20% to 50% by weight of at least one vinylaromatic monomer, in particular styrene, and 9.9% to 38% by weight of acrylonitrile and also 0.1% to 5% by weight of a monomer A-I having a chemically reactive functionality, in particular maleic anhydride, and wherein the fibre composite material has a thickness of < 10 mm, preferably of < 2 mm, particularly of < 1 mm.

10. Use of a thermoplastic fibre composite material according to any of Claims 1 to 9, wherein the fibre composite material has a ribbed structure or a sandwich construction.

11. Use of a thermoplastic fibre composite material according to any of Claims 1 to 10, wherein the fibre composite material has a layered construction and contains more than two layers.

12. Use of a thermoplastic fibre composite material according to any of Claims 1 to 11, wherein component A is produced from
65% to 80% by weight of (a-methyl)styrene,
19.9% to 32% by weight of acrylonitrile and
0.1% to 3% by weight of maleic anhydride,
wherein the reinforcing fibres B are used in the form of a laid scrim, a woven fabric, a mat, a nonwoven or a knitted fabric,
wherein the fibre composite material has a layered construction and contains more than two layers and has a ribbed structure or a sandwich construction.

13. Use of a thermoplastic fibre composite material according to any of Claims 1 to 12 for the production of windows.

14. Use of a thermoplastic fibre composite material according to any of Claims 1 to 12 for the production of transparent housings or transparent furnishings.

15. Transparent mouldings, films or coatings, containing a thermoplastic fibre composite material according to any of Claims 1 to 12.

## Revendications

1. Utilisation d'un matériau composite fibreux thermoplastique, contenant :
a) au moins une masse à mouler thermoplastique A en tant que matrice,
b) au moins une couche de fibres de renforcement B, et
c) éventuellement au moins un additif C,
l'au moins une couche de fibres de renforcement B étant incorporée dans la masse à mouler thermoplastique A, et
la masse à mouler thermoplastique A présentant au moins une fonctionnalité réactive chimiquement qui réagit pendant le procédé de préparation du matériau composite fibreux avec des groupes chimiques au niveau de la surface du composant B de fibres de renforcement,
pour la préparation de corps moulés, feuilles et revêtements translucides,
**caractérisée en ce que**
la masse à mouler thermoplastique A agissant comme matrice est translucide et le matériau composite fibreux possède, par rapport à des matériaux composites fibreux comparables comportant des matrices qui ne présentent aucune fonctionnalité réactive chimiquement, une transmission lumineuse pour de la lumière blanche, générée au moyen d'une lampe selon la norme DIN EN 12464 dotée d'une température de couleur de 5 300 à 7 000 Kelvin, au moins 20 % plus élevée, mesurée à une épaisseur de couche du matériau composite fibreux respectif de 1 mm,
**en ce que** la fonctionnalité réactive chimiquement de la masse à mouler thermoplastique A est basée sur des composants choisis dans le groupe constitué par une fonction de type anhydride d'acide maléique, une fonction N-phénylmaléimide et une fonction (méth)acrylate de glycidyle,
**en ce que** les fibres de renforcement B contiennent au niveau de la surface une ou plusieurs des fonctionnalités réactives chimiquement du groupe constitué par : des groupes hydroxy, des groupes ester et des groupes amino, et
**en ce que** les fibres de renforcement B sont incorporées en tant que structure plate par couches dans le matériau composite fibreux.

2. Utilisation d'un matériau composite fibreux thermoplastique selon la revendication 1, contenant
a) 30 à 95 % en poids, en particulier 38 à 70 % en poids d'une masse à mouler thermoplastique A,
b) 5 à 70 % en poids, en particulier 29,9 à 61,9 % en poids d'une fibre de renforcement B, et
c) 0 à 40 % en poids, en particulier 0,1 à 25 % en poids, de l'additif C.

3. Utilisation d'un matériau composite fibreux thermoplastique selon la revendication 1 ou 2, la masse à mouler thermoplastique A utilisée comme matrice M étant à base d'un copolymère de styrène et étant amorphe.

4. Utilisation d'un matériau composite fibreux thermoplastique selon l'une quelconque des revendications 1 à 3, la masse à mouler thermoplastique A étant choisie dans le groupe constitué par : des copolymères de styrène-acrylonitrile, des copolymères de α-méthylstyrène-acrylonitrile, des copolymères d'acrylonitrile-styrène à résistance aux chocs modifiée, ainsi que des mélanges des copolymères mentionnés avec un polycarbonate ou un polyamide.

5. Utilisation d'un matériau composite fibreux thermoplastique selon la revendication 4, les copolymères d'acrylonitrile-styrène à résistance aux chocs modifiée étant choisis dans le groupe constitué par des copolymères d'acrylonitrile-butadiène-styrène (ABS) et des copolymères d'acrylonitrile-styrène-ester acrylique (ASA).

6. Utilisation d'un matériau composite fibreux selon l'une quelconque des revendications 1 à 5, la masse à mouler thermoplastique A contenant au moins 0,1 % en poids de monomères dotés d'une fonctionnalité réactive chimiquement, par rapport à la quantité de composant A.

7. Utilisation d'un matériau composite fibreux thermoplastique selon l'une quelconque des revendications 1 à 6, les fibres de renforcement B étant constituées de fibres de verre qui contiennent, en tant que fonctionnalité réactive chimiquement, des groupes silanol au niveau de la surface.

8. Utilisation d'un matériau composite fibreux thermoplastique selon l'une quelconque des revendications 1 à 7, le composant A étant préparé à partir de 65 à 80 % en poids de (α-méthyl) styrène, 19,9 à 32 % en poids d'acrylonitrile et 0,1 à 3 % en poids d'anhydride d'acide maléique, les fibres de renforcement B étant utilisées sous la forme d'une nappe, d'un tissu, d'un mat, d'un feutre ou d'une étoffe.

9. Utilisation d'un matériau composite fibreux thermoplastique selon l'une quelconque des revendications 1 à 7, la masse à mouler thermoplastique A étant préparée à partir de 35 à 70 % en poids d'au moins un diène conjugué, en particulier de butadiène, 20 à 50 % en poids d'au moins un monomère vinylaromatique, en particulier de styrène, et 9,9 à 38 % en poids d'acrylonitrile ainsi que 0,1 à 5 % en poids d'un monomère A-I, qui présente une fonctionnalité réactive chimiquement, en particulier l'anhydride d'acide maléique, et le matériau composite fibreux présentant une épaisseur de < 10 mm, de préférence de < 2 mm, particulièrement de < 1 mm.

10. Utilisation d'un matériau composite fibreux thermoplastique selon l'une quelconque des revendications 1 à 9, le matériau composite fibreux présentant un nervurage ou une structure en sandwich.

11. Utilisation d'un matériau composite fibreux thermoplastique selon l'une quelconque des revendications 1 à 10, le matériau composite fibreux étant construit par couches et contenant plus de deux couches.

12. Utilisation d'un matériau composite fibreux thermoplastique selon l'une quelconque des revendications 1 à 11, le composant A étant préparé à partir de
65 à 80 % en poids de (α-méthyl)styrène,
19,9 à 32 % en poids d'acrylonitrile et
0,1 à 3 % en poids d'anhydride d'acide maléique, les fibres de renforcement B étant utilisées sous la forme d'une nappe, d'un tissu, d'un mat, d'un feutre ou d'une étoffe,
le matériau composite fibreux étant construit par couches et contenant plus de deux couches et présentant un nervurage ou une structure en sandwich.

13. Utilisation d'un matériau composite fibreux thermoplastique selon l'une quelconque des revendications 1 à 12 pour la fabrication de fenêtres.

14. Utilisation d'un matériau composite fibreux thermoplastique selon l'une quelconque des revendications 1 à 12, pour la fabrication de boîtiers transparents ou de mobiliers transparents.

15. Corps moulés, feuilles ou revêtements transparents, contenant un matériau composite fibreux thermoplastique selon l'une quelconque des revendications 1 à 12.
